# EUROPÄISCHE PATENTSCHRIFT

(11) **EP 4 360 448 B1**
(45) Veröffentlichungstag und Bekanntmachung des Hinweises auf die Patenterteilung: **24.06.2026**
(21) Anmeldenummer: 23206196.0
(22) Anmeldetag: 26.10.2023
(51) Int. Cl.: A01G 9/02

(54) **PFLANZMODUL FÜR EINEN HÄNGENDEN GARTEN**
PLANT MODULE FOR A HANGING GARDEN
MODULE DE PLANTATION POUR JARDIN SUSPENDU

(30) Priorität: 26.10.2022 DE 202022106034 U; 26.10.2022 DE 102022128357
(43) Veröffentlichungstag der Anmeldung: 01.05.2024
(73) Patentinhaber: Legat N. Holding GmbH, 91459 Markt Erlbach (DE)
(72) Erfinder: SCHEIDERER, Norbert, 91459 Markt Erlbach (DE)
(74) Vertreter: Patentanwälte Geyer, Fehners & Partner mbB

(56) Entgegenhaltungen:
- CN-B- 101 052 296
- DE-U1- 202011 109 100
- GB-A- 2 603 809
- US-A1- 2013 227 884

## Beschreibung

Die Erfindung bezieht sich auf ein Pflanzmodul für einen hängenden Garten, das einen Container mit einer Frontplatte aufweist, die mind. eine Öffnung für einen Pflanzenspross hat.

Ein solches gattungsgemäßes Pflanzmodul ist aus der EP 3 172 960 A1 bekannt.

Die US 2013/227884 A1 beschreibt einen Luftreiniger mit einer bepflanzten vertikalen Wandung.

Weitere Pflanzmodule und Anordnungen für hängende Gärten, die auch als vertikale Gärten bezeichnet werden, sind in den Druckschriften DE 20 2018 001 482 U1, DE 10 2018 123 378 A1, KR 1020140104127 A, DE 10 2019 203 887 A1, WO 2014/147523 A1, WO 2020/243672 A1, EP 3 127 422 B1, DE 20 2020 105 988 U1, WO 2010/142000 A1, US 7,788,848 B1, WO 2011/136842 A1, DE 1 179 754, WO 2017/064338 A1, CN 101 052 296 B, DE 20 2011 109100 U1 und der GB 2 603 809 A beschrieben.

Solche Pflanzmodule dienen zur Begrünung von Wänden, insbesondere auch im Innenbereich. Zum Teil werden auch Kräuter etc. für die häusliche Küche in solchen Pflanzmodulen gezogen. Um individuell herauswachsende Pflanzensprosse zu ermöglichen, sieht die EP 3 172 960 A1 ein Pflanzmodul vor, das an seiner Vorderseite eine Vielzahl von Öffnungen aufweist. Die unteren Ränder der Öffnungen sind mit einer Blende, die nach außen auskragt, verschlossen, so dass das Pflanzbodenmaterial nicht herausfallen kann und im oberen Teil der freigelassenen Öffnung jeweils ein Pflanzenspross durchwachsen kann. Der Aufbau gemäß EP 3 172 960 A1 erlaubt es, in jede Öffnung eine einzelne Pflanze einzusetzen. Dadurch sind unterschiedliche Pflanzen möglich. Da das Pflanzensubstrat sich hinter der ganzen Frontplatte erstreckt, erfolgt das Bepflanzen durch die Öffnungen. Dies kann mühselig sein.

Der Erfindung liegt deshalb die Aufgabe zugrunde, ein Pflanzmodul der gattungsgemäßen Art so weiterzubilden, dass das Bepflanzen des Pflanzmoduls sowie gegebenenfalls das Versorgen bzw. Ernten der darin vorgesehenen Pflanzen erleichtert werden kann. Zudem sollte das Bewässern verbessert werden.

Die Erfindung ist in den Ansprüchen 1 und 14 definiert. Die abhängigen Ansprüche definieren bevorzugte Weiterbildungen.

Das Pflanzmodul ist modular aufgebaut. Dabei ist die Frontplatte lösbar am Container befestigt. Auf diese Weise können unterschiedliche Frontplatten, beispielsweise mit Öffnungen unterschiedlicher Form und Größe, verwendet werden. Dies ermöglicht es, Pflanzen im Pflanzcontainer zu kombinieren, die unterschiedlich große Öffnungen für den Pflanzenspross bzw. ein unterschiedliches Volumen im Pflanzbehälter verlangen. Auch ist der Zugang zum Pflanzsubstrakt erleichtert.

Der modulare Aufbau ist besonders bevorzugt so ausgestaltet, dass der Container ein Rahmengehäuse aufweist, das an der Vorderseite eine z.B. U-förmige Öffnung aufweist. Die Frontplatte ist dann lösbar über der Öffnung befestigbar. Bei einem derart modularen Aufbau ist ein besonders verschmutzungsarmer und im Übrigen auch ästhetisch ansprechender Aufbau erreicht, wenn das Rahmengehäuse Außenwände aufweist, die bei befestigtem Abwassersammelkasten bzw. aufgesetztem Wasserversorgungskasten diesen bzw. diese verdecken. Die Kästen werden also so in das Rahmengehäuse eingesetzt, dass sie innerhalb der Außenwände zu liegen kommen und somit keine verschmutzungsanfälligen Stöße oder Fugen bestehen.

Die Bauweise kann besonders vorteilhaft an eine Herstellung mittels Spritzguss angepasst werden. Dort besteht die Anforderung, dass die Bauteile auf einer Spritzgussform entformt werden müssen. Dies ist einfach möglich, wenn das Rahmengehäuse eine sich zwischen Rückwand und Vorderseite verjüngende Grundform aufweist und die Frontplatte so befestigbar ist, dass sie die Verjüngung ausgleicht, so dass insgesamt eine Quaderform gegeben ist. Das Rahmengehäuse kann dann insbesondere eine keilförmige Grundform haben, die z.B. an ihrem unteren Rand weniger tief ist als am oberen Rand. Um dem Pflanzmodul dennoch eine quaderförmige Außenform zu verleihen, steht die Außenseite der Frontplatte an einem, z.B. dem unteren Ende des Rahmengehäuses weiter vor, als am gegenüberliegenden Ende. So kann z.B. die Innenseite der Frontplatte oben am Rahmengehäuse anliegen und unten durch Abstandshalter in einem Abstand vom Rahmengehäuse gehalten sein, der dem Maß entspricht, um das sich das Rahmengehäuse nach unten verjüngt. Die Abstandshalter sind bevorzugt an der Frontplatte angebracht. Sie erstrecken sich entlang der Verjüngungsrichtung und sind ihrerseits die Verjüngung ausgleichend keilförmig, da dies ebenfalls das Entformen beim Spritzguss erleichtert. Sie können dann zudem auch einen keilförmigen Spalt, der am Rand des Rahmengehäuses zur Frontplatte entstehen würde, schließen.

Das Pflanzmodul weist einen zur hängenden Wandmontage und zur Aufnahme von Pflanzen ausgebildeten Container auf. Der Container hat eine Rückwand, welche zur Wandmontage ausgebildet ist, einen Deckel, einen Boden und zwei Seitenwände, die alle bevorzugt an einem Rahmengehäuse ausgebildet und/oder befestigt sind. Der Deckel, der Boden und die Seitenwände definieren - von vorne auf die Rückwand gesehen - einen äußeren Umriss des Containers. Das Pflanzmodul weist weiter die am Container montierbare Frontplatte und Befestigungsmittel zur lösbaren Montage der Frontplatte am Container auf. Die Frontplatte hat mindestens zwei Öffnungen für einen Pflanzenspross und optional eine Blende, am unteren Rand jeder Öffnung, um Pflanzbodenmaterial gegen Herausfallen zu sichern. Die Befestigungsmittel sind an der zum Container weisenden Seite der Frontplatte angebrachte oder ausgebildete Montageelemente und wirken mit am Container angebrachten oder ausgebildeten Gegenelementen so zusammen, dass die Frontplatte über einen Montageweg am Container befestigbar ist, bei dem - gesehen auf die Rückwand - die Frontplatte stets innerhalb des äußeren Umrisses des Containers bleibt.

Beim Lösen/Befestigen der Frontplatte wird der äußere Umriss des Containers nicht überschnitten. Um die Befestigungsmittel dennoch so auszugestalten, dass das Lösen/Befestigen der Frontplatte mit einer seitlichen Verschiebung der Frontplatte ausgeführt wird, ist bevorzugt der Außenumriss der Frontplatte kleiner als der äußere Umrisses des Containers und deckt bevorzugt zwischen 80% und 90%, besonders bevorzugt maximal 95% des Umrisses des Containers ab.

Das Lösen/Befestigen der Frontplatte, ohne dass der äußere Umriss des Containers überschritten wird, ermöglicht die Befestigung und Demontage der Frontplatte, selbst wenn das Rahmengehäuse des Pflanzmoduls bereits mit weiteren Pflanzmodulen zu einer Pflanzwand gestapelt ist. Es ist kein zusätzlicher Platzbedarf über bzw. unter dem Pflanzmodul erforderlich, um die Frontplatte zu montieren bzw. zu demontieren Auch greift bevorzugt die Frontplatte nicht an den Seiten über den Container, weil dann an den Seiten ebenfalls kein zusätzlicher Platzbedarf nötig ist und Pflanzmodule direkt nebeneinander angebracht werden können, ohne die Montage/Demontage der Frontplatte zu beeinträchtigen. Andernfalls müsste, eine Wand aus neben- und/oder übereinander angebrachten Pflanzmodulen zuerst abgebaut werden, um an einem innenliegenden Pflanzmodul die Frontplatte abnehmen zu können.

Bei Montageelementen und Gegenelementen, bei denen das Lösen/Befestigen unter seitlicher Verschiebung der Frontplatte ausgeführt wird, muss zum Verschieben bevorzugt eine Mindestkraft aufgewendet werden, die durch Rast- und/oder Klemmelemente bewirkt ist. Eine Fixierung zwischen Montageelementen und Gegenelementen ist bevorzugt durch Verrastung und/oder Klemmung sichergestellt. Besonders bevorzugt kann zwischen den Montageelementen und den Gegenelementen (ggf. zusätzlich) eine Magnetverbindung bestehen, wobei Montageelemente und Gegenelemente als einander anziehende Gegenpole ausgebildet sind.

Bevorzugt sind als Montageelemente an der zum Container weisenden Seite - also an der Rückseite der Frontplatte - eine Leiste von Rasthaken vorgesehen. Sie sind von L-förmigem Querschnitt in Richtung der Seitenwände des Containers ausgerichtet; der Fuß "L" der Rasthaken verläuft parallel zur Frontplatte. Dazu passend sind am Container Leisten von Rastaufnahmen ausgebildet, so dass zuerst die Rasthaken in Öffnungen der Rastaufnahmen eingesetzt - was eine Bewegung der Frontplatte auf den Container hin ist - und dann die Rasthaken in den Rastaufnahmen verschoben werden - was eine Verschiebung längs der Leistenrichtung ist.

Zusätzlich sind optional am oberen Ende der zum Container weisenden Rückseite der Frontplatte mindestens ein, z.B. T-förmig vorstehender Sicherungshaken für eine z.B. T-förmige Aussparung im Container vorgesehen, und am unteren Ende der Rückseite der Frontplatte ist eine Einhängeleiste, als zusätzliche Montageelemente angeordnet. Die Einhängeleiste steht L-förmig vor und erstreckt sich z.B. über etwa 90% der Länge der Frontplatte. Sie kann direkt am Container eingehakt werden wenn zugleich die Sicherungshaken in die Aufnahmen eingehängt werden. Der Sicherungshaken greift beim Anlegen der Frontplatte in die Aufnahme. Die Frontplatte wird durch eine Schiebebewegung nach unten geschoben, so dass die Rasthaken (und soweit vorhanden auch der Sicherungshaken) eingreifen, und sich die Frontplatte so nicht mehr nach vorne bewegen kann. Die Frontplatte wird also an den Container angelegt und in die fixierte Position geschoben. Wird die Frontplatte am Rahmen angelegt und anschließend nach unten geschoben, haken die Rasthaken an Raststegen der Rastaufnahmeleiste am Container ein und klemmen bevorzugt dort. Der Sicherungshaken wird nach unten bewegt und hakt in der T-förmigen Ausnehmung ein; dadurch kann die Frontplatte nicht mehr abgehoben werden. Ebenso hakt die Einhängeleiste ein und klemmt bevorzugt am Rahmengehäuse. Die Frontplatte ist - wenn alle drei Befestigungsmittel vorgesehen werden - dreifach am Container fixiert, wobei alle drei verschiedenen Montageelemente mit den drei verschiedenen Gegenelementen zusammenwirken. Die Frontplatte kann nur durch Bewegung in eine einzige Richtung wieder vom Container gelöst werden, nämlich durch den umgekehrten Montageweg nach oben. Dann befinden sich die Rasthaken wieder zwischen den Raststegen in den Rastaufnahmen, der Sicherungshaken liegt mit seinem breiten Querschnitt hinter dem breiten Querschnitt der Aufnahme und die Einhängeleiste ist ausgehakt. Alle Montageelemente sind damit von ihren Gegenelementen gelöst und die Frontplatte kann nach vorne vom Container abgenommen werden.

Der Verschiebeweg, um den die Frontplatte zum Einrasten verschoben wird, ist so gering (beispielsweise kürzer als 1 cm), dass sich der Außenumriss der Frontplatte stets innerhalb des entsprechen größeren äußeren Umrisses des Containers befindet. Dazu ist z.B. eine Eintiefung am Container vorgesehen, die die Größe der Frontplatte plus Verschiebeweg hat. Besonders bevorzugt kann der Rand des Containers dabei mit der Frontplatte in Art einer Schattenfuge ausgebildet sein, wenn die Frontplatte im verriegelten Zustand ist. Die Breite der Schattenfuge stellt den Verschiebeweg zur Verfügung.

Statt der in Ausführungsformen beschriebenen, allseitig umlaufenden Schattenfuge kann die montierte Frontplatte auch eine im Querschnitt L-förmige Fuge am äußeren Umriss des Containers ausbilden, fugenlos abschließen, zum Container eine nur einseitige Fuge, die nur an einem Rand der Frontplatte ausgebildet ist, oder nur Fugen an gegenüberliegenden Rändern der Frontplatte ausbilden.

Eine im Querschnitt L-förmige Fuge am äußeren Umriss des Containers ist gebildet, wenn der Container ohne am Außenumriss umlaufenden Rahmen, wie er für eine Schattenfuge benötigt ist, ausgeführt ist. Zugleich bleibt die Frontplatte im montierten Zustand allseitig um ein bestimmtes Maß gegenüber dem Außenumriss des Containers zurück. Ihr äußerer Umriss ist an jedem Rand um das Maß kleiner. Es liegen dann im Querschnitt L-förmige Ausnehmungen am Containerrand als Fugen vor, die jeweils parallel zur Frontplatte durch eine Wandung des Containers und senkrecht dazu durch die freiliegende Stirnseite der Frontplatte gebildet sind.

Die Frontplatte schließt in Ausführungsformen mit allen Rändern bündig mit dem äußeren Umriss des Containers ab, wenn Befestigungsmittel verwendet sind, die einen ausschließlich senkrecht zur Frontplatte verlaufenden Montageweg aufweisen. Sie können dazu beispielsweise die genannten Magnete aufweisen, oder die Montageelemente sind z.B., Rastzapfen an der Rückseite der Frontplatte und die Gegenelemente entsprechende Rastaufnahmen am Container. Die Frontplatte wird dann lediglich auf das Rahmengehäuse des Containers gedrückt, um sie zu befestigen. Der Montageweg verläuft senkrecht zur Frontplatte. Zum Lösen wird sie lediglich abgezogen, wozu man praktischerweise in die Öffnungen, die in der Frontplatte für die Pflanzen vorgesehen sind, hinein greifen kann, um die Frontplatte abzuziehen.

Eine einseitige Fuge ist ausgebildet, wenn die Frontplatte angesetzt wird und danach seitlich um den Verschiebeweg verschoben wird. Der Außenumriss des Containers ist dann z.B. an drei Rändern mit dem äußeren Umriss der Frontplatte identisch, nämlich an den beiden (z.B. seitlichen) Rändern, die parallel zum Verschiebeweg liegen, und am (z.B. unteren) Rand, auf dem der Verschiebeweg hinführt. Am vierten (z.B. oberen) Rand, von dem der Verschiebeweg wegführt, entsteht die dann einzige Fuge. Natürlich ist es auch möglich, das Fugenspiel symmetrisch auszugestalten, so dass Fugen, die jeweils das Maß des Verschiebewegs haben, nur im an zwei gegenüber liegenden Rändern vorliegen, die in Richtung des Verschiebewegs liegen, beispielsweise am oberen Rand und am unteren Rand. Die eine Fuge entsteht durch den Verschiebeweg nach dem Ansetzen der Frontplatte, die gegenüber liegende Fuge ist vor Ausführung des Verschiebewegs doppelt so groß wie der Verschiebeweg und reduziert sich dann durch die Verschiebung auf ein zur entstehenden Fuge symmetrisches Maß.

Die Fuge(n) ist/sind bevorzugt kleiner als 2 cm, besonders bevorzugt nicht größer als 1 cm.

Damit die Frontplatte in jedem Zustand des Containers befestigt/gelöst werden kann, umgreift sie die Seitenwände des Containers nicht.

In einer Weiterbildung oder eigenständigen Erfindung weist das Pflanzmodul für einen hängenden Garten einen Container mit einer Frontplatte auf, die mindestens eine Öffnung für einen Pflanzenspross aufweist. Eine Blende ist am unteren Rand der Öffnung angeordnet, um Pflanzbodenmaterial gegen Herausfallen zu sichern. Sie lässt zugleich den oberen Teil der Öffnung frei, so dass der Pflanzenspross herauswachsen kann. Das Pflanzmodul weist mindestens einen als Schublade ausgebildeten Pflanzbehälter auf. Die Schublade ist zur Aufnahme von Pflanzbodenmaterial ausgebildet und hat ein der Öffnung entsprechendes Korpusmaß. Sie ist durch die Frontplatte und deren Öffnung in den Container einschiebbar und herausziehbar. Die Schubladenfront bildet die Blende, die den unteren Rand der Öffnung verschließt, wenn die Schublade in die Öffnung eingeschoben ist.

Das Prinzip der Schublade kann bevorzugt mit der erwähnten Befestigung der Frontplatte kombiniert, aber auch unabhängig davon vorgesehen sein.

Durch dieses Konzept ist jede Öffnung individuell mit einem Pflanzbehälter versehen. Das Bepflanzen, Versorgen und Ernten kann unproblematisch außerhalb des Containers vorgenommen werden, da dazu lediglich die Schublade aus der Öffnung herausgezogen wird. Das Konzept der Schubladen ermöglicht es weiter, für unterschiedliche Pflanzen auch individuell angepasstes Pflanzbodenmaterial zu verwenden. Auch ist ein ungewünschtes Durchwuchern des Pflanzmoduls vermieden, da das Wurzelwachstum der Pflanzen auf den jeweiligen Pflanzbehälter, d.h. die jeweilige Schublade beschränkt ist. Zudem ist auch die Versorgung mit Nährstoffen und Wasser nun pflanzenindividuell möglich, d.h. es können in einem Pflanzmodul mehrere Öffnungen und entsprechende Schubladen vorgesehen werden, und man kann jede Schublade individuell und unterschiedlich mit Wasser versorgen. Trocken wachsende Pflanzen können damit im Pflanzmodul kombiniert werden mit Pflanzen, die einen sehr feuchten Boden benötigen.

Besonders bevorzugt ist natürlich eine Ausgestaltung, bei der die Frontplatte mehrere Öffnungen für insgesamt mehrere Pflanzensprosse aufweist und für jede Öffnung eine entsprechende Schublade vorgesehen ist.

Die Schublade wird durch die Öffnung in den Container hineingeschoben. Es ist bevorzugt, hierzu eine an der Frontplatte angebrachte Führung, beispielsweise eine Führungsschiene, vorzusehen, die sich von der Frontplatte in den Container hinein erstreckt. Alternativ oder zusätzlich kann die Schublade an der Frontplatte eingehängt werden. Besonders bevorzugt weist die Schublade an ihrer Unterseite eine Stufe auf, mit der sie direkt an einem Vorsprung an der Rückseite der Frontplatte oder direkt in der Öffnung der Frontplatte eingehängt werden kann.

Alternativ oder zusätzlich kann die Führung auch dadurch realisiert werden, dass der Container eine der Frontplatte gegenüberliegende Rückwand aufweist und die Schublade sich im eingeschobenen Zustand an der Rückwand abstützt. Dies ist zweckmäßigerweise damit zu kombinieren, dass die Schublade im eingeschobenen Zustand an der Frontplatte einhängbar ist. Dann kann sich die Schublade im eingeschobenen Zustand an der Rückwand sowie aufgrund der Einhängung an der Frontplatte abstützen, so dass separate Führungsschienen nicht zwingend erforderlich sind.

Besonders bevorzugt ist die Schublade im eingesetzten Zustand von der Frontplatte in den Container hinein auskragend ausgebildet, so dass sie über die Führung und/oder das Einhängen an der Frontplatte befestigt ist. Weiter bevorzugt ragt die Schublade im eingesetzten Zustand nicht durch die Öffnung hindurch aus dem Pflanzmodul heraus. Dann ist die Länge der Schublade gleich oder geringer dem Maß zwischen der Frontplatte und der Rückwand des Containers. Auch kann die Blende im Wesentlichen parallel zur Frontplatte liegen, wenn sie kleiner ist als die Öffnung.

Das Konzept der Schubladen hat weiter den Vorteil, dass eine besonders gute Feuchtigkeitsverteilung im Pflanzbehälter realisiert werden kann. Insbesondere ist es einfach möglich, den Schubladenboden so zu gestalten, dass der Schubladenboden im eingeschobenen Zustand im Wesentlichen horizontal liegt - natürlich darauf bezogen, dass der Container entsprechend aufrecht angeordnet ist, beispielsweise an einer Wand hängt. Optional verläuft auch der Einschiebevorgang horizontal.

Mehrere Pflanzmodule können zu einer größeren Pflanzwand kombiniert werden.

Zur Wasserversorgung ist es zweckmäßig, unterhalb der Pflanzen einen Abwassersammelkasten vorzusehen. Dieser ist bevorzugter Weise am Boden des Containers befestigbar. Zur Wasserversorgung kann oberhalb des Containers, also an dessen Oberseite, ein Wasserversorgungskasten aufgesetzt werden. Ebenso ist eine Verrohrung mit Wasserleitungen möglich.

Soweit in der Beschreibung Angaben wie "oben" oder "unten", "links" oder "rechts", "vorne" oder "hinten" verwendet werden, sind diese auf die Orientierung in den Zeichnungen bzw. die vorgesehene aufrechte Montage des Pflanzmoduls an einer Wand bezogen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine perspektivische Schnittdarstellung eines Pflanzmoduls,
- Fig. 2: eine perspektivische Schnittdarstellung eines abgewandelten Pflanzmoduls,
- Fig. 3: eine Schnittdarstellung des Pflanzmoduls der Fig. 1,
- Fig. 4: eine perspektivische Schnittdarstellung des Pflanzmoduls der Fig. 1 im Zustand, in dem eine Schublade eingeschoben wird,
- Fig. 5: eine Darstellung ähnlich der Fig. 4 mit eingeschobener Schublade,
- Fig. 6: eine perspektivische Ansicht des Pflanzmoduls mit entnommenen Schubladen,
- Fig. 7: das Pflanzmodul der Fig. 6 mit nunmehr eingeschobenen Schubladen,
- Fig. 8: eine Explosionsdarstellung des Pflanzmoduls der Fig. 7 zum Verdeutlichen des modularen Aufbaus,
- Fig. 9: eine Frontplatte des Pflanzmoduls mit eingesetzten Schubladen in einer Ansicht von vorne (links) bzw. von der Rückseite her (rechts),
- Fig. 10: vier Ansichten einer Schublade des Pflanzmoduls der Fig. 1 oder 2,
- Fig. 11: eine isometrische Darstellung eines Pflanzmoduls mit abgenommener Frontplatte,
- Fig. 12: das Pflanzmodul gemäß Fig. 11 in seitlicher Schnittdarstellung,
- Fig. 13: eine Detailansicht der Schnittdarstellung gemäß Fig. 12,
- Fig. 14: einen isometrischen Schnitt des Pflanzmoduls gemäß Fig. 11,
- Fig. 15: eine Detailansicht des isometrischen Schnittes gemäß Fig. 14,
- Fig. 16: das Pflanzmodul gemäß Fig. 11 in Schnittdarstellung von oben,
- Fig. 17: eine erste Detailansicht der Schnittdarstellung gemäß Fig. 16,
- Fig. 18: eine zweite Detailansicht der Schnittdarstellung gemäß Fig. 16,
- Fig. 19: eine isometrische Darstellung eines Pflanzmoduls mit angelegter Frontplatte,
- Fig. 20: eine erste Detailansicht der isometrischen Darstellung gemäß Fig. 19,
- Fig. 21: eine zweite Detailansicht der isometrischen Darstellung gemäß Fig. 19,
- Fig. 22: das Pflanzmodul gemäß Fig. 19 in seitlicher Schnittdarstellung,
- Fig. 23: eine Detailansicht der Schnittdarstellung gemäß Fig. 22,
- Fig. 24: einen isometrischen Schnitt des Pflanzmoduls gemäß Fig. 19,
- Fig. 25: eine Detailansicht des isometrischen Schnittes gemäß Fig. 19,
- Fig. 26: das Pflanzmodul gemäß Fig. 19 in Schnittdarstellung von hinten,
- Fig. 27: eine erste Detailansicht der Schnittdarstellung gemäß Fig. 26,
- Fig. 28: eine zweite Detailansicht der Schnittdarstellung gemäß Fig. 26,
- Fig. 29: eine isometrische Darstellung eines Pflanzmoduls mit fixierter Frontplatte,
- Fig. 30: eine erste Detailansicht der isometrischen Darstellung gemäß Fig. 29,
- Fig. 31: eine zweite Detailansicht der isometrischen Darstellung gemäß Fig. 29,
- Fig. 32: das Pflanzmodul gemäß Fig. 29 in seitlicher Schnittdarstellung,
- Fig. 33: eine Detailansicht der Schnittdarstellung gemäß Fig. 32,
- Fig. 34: einen isometrischen Schnitt des Pflanzmoduls gemäß Fig. 29,
- Fig. 35: eine Detailansicht des isometrischen Schnittes gemäß Fig. 29,
- Fig. 36: das Pflanzmodul gemäß Fig. 29 in Schnittdarstellung von hinten,
- Fig. 37: eine erste Detailansicht der Schnittdarstellung gemäß Fig. 36,
- Fig. 38: eine zweite Detailansicht der Schnittdarstellung gemäß Fig. 36,
- Fig. 39: das Pflanzmodul gemäß Fig. 29 in Schnittdarstellung von oben,
- Fig. 40: eine erste Detailansicht der Schnittdarstellung von oben gemäß Fig. 39,
- Fig. 41: eine zweite Detailansicht der Schnittdarstellung von oben gemäß Fig. 39,
- Fig. 42: eine Pflanzwand mit abgenommener Frontplatte in isometrischer Darstellung, und
- Fig. 43: eine Pflanzwand mit fixierter Frontplatte in isometrischer Darstellung.

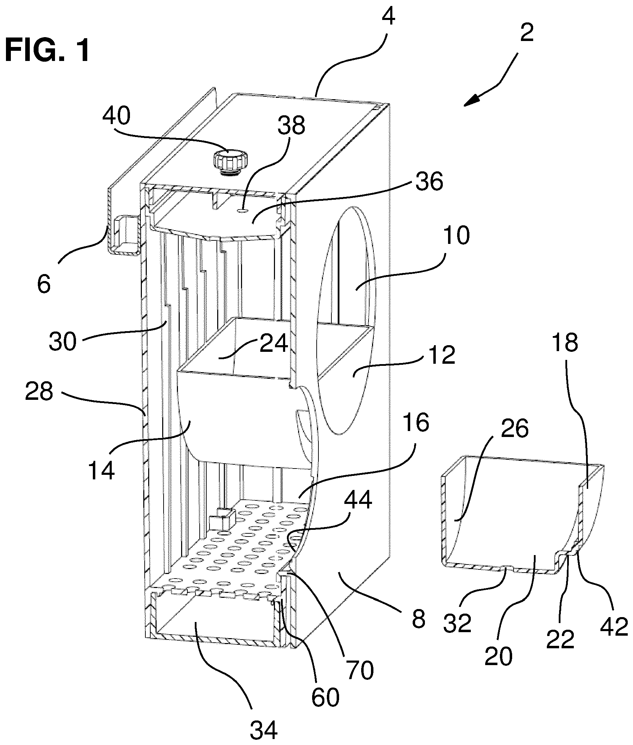

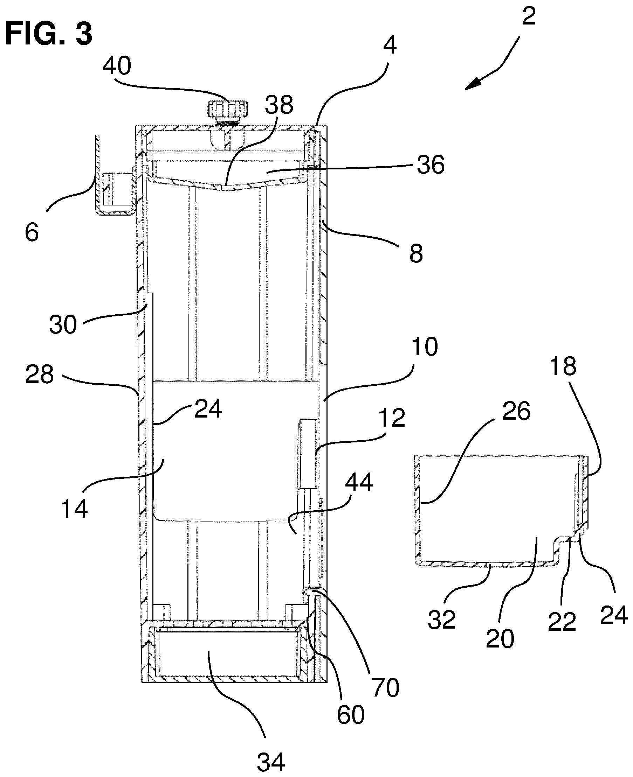

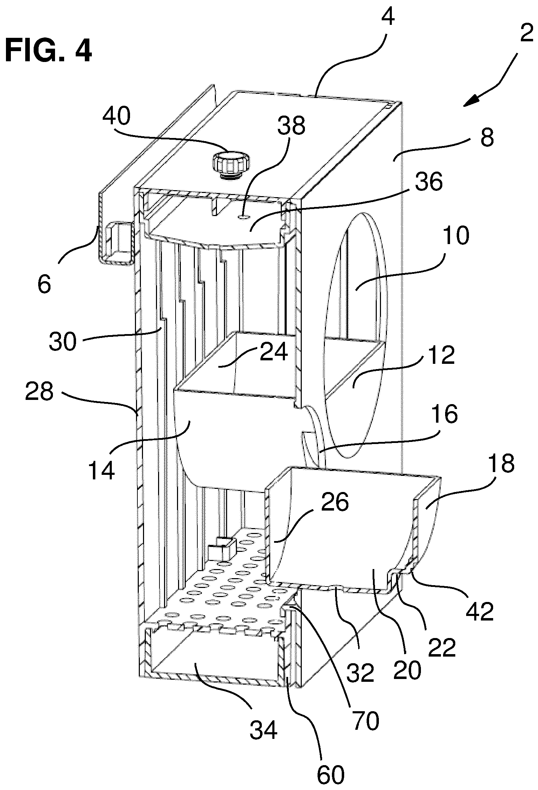

Fig. 1 zeigt in perspektivischer Teilschnittdarstellung ein Pflanzmodul 2 für einen hängenden Garten. Dieses Pflanzmodul 2 ist in Fig. 3 in Schnittdarstellung sowie weiter in den Fig. 4 bis 7 dargestellt. In den Zeichnungen sind die entsprechenden Bezugszeichen für Elemente des Pflanzmoduls 2 einheitlich verwendet.

Das Pflanzmodul 2 umfasst einen Container 4, der an seiner Rückseite über eine Schiene 6 an einer Wand aufgehängt werden kann. Im aufgehängten Zustand befindet er sich dann in der Lage, die in Fig. 1 dargestellt ist. An der Vorderseite weist der Container 4 eine Frontplatte 8 auf, die bevorzugt lösbar befestigt ist. Die Frontplatte 8 hat eine Öffnung 10, deren unterer Teil durch eine Blende verschlossen ist. Die Blende ist die Front 12 einer Schublade 14, welche in die Öffnung 10 eingeschoben ist und die als Pflanzbehälter dient. In diese Schublade 14 wird Pflanzbodenmaterial, beispielsweise Erde oder ein feuchtigkeitsspeicherndes Pflanzsubstrat eingebracht und in dieses Pflanzbodenmaterial wird eine Pflanze gesetzt. Der obere Teil der Öffnung 10 wird von der Front 12 freigelassen, so dass ein Pflanzenspross hindurchgeführt werden kann und am Pflanzmodul 2 nach außen wächst.

Bei eingeschobenem Pflanzbehälter verbleibt für den Pflanzenspross eine Pflanzenöffnung, die durch den nicht von der Blende abgedeckten Teil der Öffnung 10 gebildet ist. Die Front 12 sichert als Blende das Pflanzbodenmaterial im Pflanzbehälter gegen Herausfallen.

Die Schublade 14 hat in ihrem Querschnitt, also senkrecht zur Front 12, ein Korpusmaß, das dem der Öffnung 10 entspricht, so dass sie durch die Öffnung 10 in das Innere des Containers 4 eingeschoben werden kann. Die Front 12 lässt den oberen Teil der Öffnung 10 für den Pflanzenspross frei. Im eingeschobenen Zustand ist die Schublade 14 durch geeignete Mittel im Container 4 fixiert. In der Darstellungsform der Fig. 1 erfolgt dies dadurch, dass die Schublade 14 im Bereich ihrer Front 12 an den unteren Rand der Öffnung 10 eingehängt wird.

Der Container 4 hat zusätzlich zur Öffnung 10 noch eine weitere Öffnung 16, in die ebenfalls eine Schublade 20 mit Front 18 eingehängt wird. Diese weitere Schublade 20 ist ebenfalls in ihrem Korpusmaß an die Größe der Öffnung 16 angepasst. Sie entspricht in ihrem Aufbau der Schublade 14.

Beide Schubladen 14, 20 haben eine Rückwand 24 bzw. 26, die im eingeschobenen Zustand, wenn die Schublade 14 bzw. 20 am unteren Rand der Öffnung 10 bzw. 16 eingehängt ist, an einer Rückwand 28 des Containers 4 anliegen. Auf diese Weise wird die Schublade 14, 20 in der Stellung, in der sie von der Frontplatte 8 zur Rückwand 28 hin auskragt, im Container 4 stabilisiert, da die Rückseite 24, 26 der Schublade 14, 20 sich an der Rückwand 28 abstützt. Bevorzugt weist die Rückwand 28 dazu mindestens einen Steg 30 auf, an den die entsprechende Rückseite 24, 26 zur Anlage kommt. Durch den Steg 30 ist eine flächige Anlage an der Rückwand 28 vermieden, was aus Gründen der Luftzirkulation vorteilhaft ist. Die Stege sind keilförmig, d.h. an einem Ende (hier unten) weniger dick als am anderen Ende (hier oben). Dies erleichtert die Herstellung per Spritzguss, da das Entformen einfacher ist.

Die Länge der Schublade 14, 20 von der Front 12, 18 zur Rückseite 24, 26 entspricht dem Maß zwischen der Frontplatte 8 und der Rückwand 28 bzw. dem Steg 30.

Für die Schublade 20 ist ein Abflussloch 32 zu erkennen, durch welches Flüssigkeit aus dem Inneren der Schublade 20, und damit des entsprechenden Pflanzbehälters, abfließen kann. Gleiches gilt auch für die Schublade 14. Abgeflossenes Wasser wird in einem unteren Abschnitt des Containers 4 in einem Sammelkasten 34 gesammelt und abgeleitet. Zugeführt wird das Wasser, welches z.B. zur Versorgung der Pflanzen mit Nährstoffen angereichert ist, über einen Versorgungskasten 36, der über der Position jeder Schublade 14, 20 eine Zuflussöffnung 38 aufweist. Die Menge an Flüssigkeit, die durch die Zuflussöffnung 38 in die Schublade 14 (analoges gilt auch für die Schublade 20 und deren Abflussloch) zufließt, wird über eine Belüftungsschraube 40 eingestellt. Der Versorgungskasten 36 erhält Zuluft ausschließlich durch die Belüftungsschraube 40, so dass hierüber eingestellt werden kann, mit welcher Flussrate das mit Nährstoffen versetzte Wasser aus den Abflusslöchern in die Schubladen 14, 20 tropft. Durch die Öffnung der Belüftungsschraube ist zudem das Befüllen des Versorgungskastens 36 möglich.

Die Schubladen 14, 20 können durch die Öffnungen 10, 16 bequem aus dem Container 4 entnommen werden, um Pflanzen einzusetzen, zu bearbeiten, entnehmen, ernten oder anderweitig zu behandeln.

Die Ausführungsform der Fig. 1 zeigt, dass die Schubladen 14, 20 an ihrer Vorderseite zur Front 12, 18 hin eine Stufe 22 aufweisen, sowie zwischen der Stufe 22 und der Front 12, 18 Raststege 42, die in entsprechende Rastnuten 44, die am unteren Rand der Öffnung 10, 16 ausgebildet sind, eingreifen, um die Schublade 14, 20 am Rand der Öffnung 10, 16 gesichert zu halten, während sie sich zugleich an der Rückwand 28 abstützt.

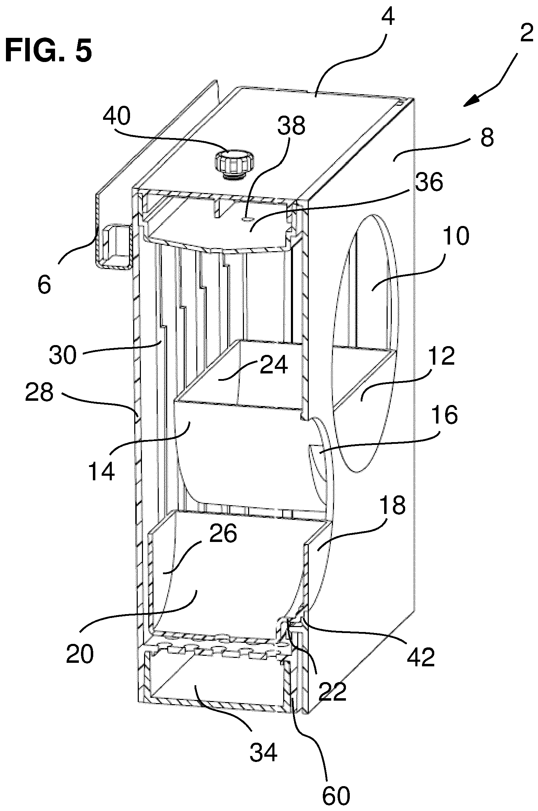

Fig. 3 zeigt die Ausführungsform der Fig. 4 in einer Schnittdarstellung. In Fig. 4 ist zu erkennen, wie die Schublade 20 durch die Öffnung 16 eingesetzt wird, und Fig. 5 zeigt den eingesetzten Zustand der Schublade 20.

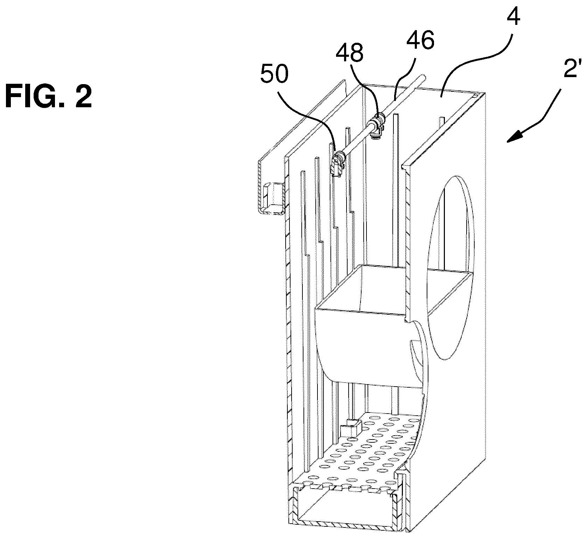

Fig. 2 zeigt eine abgewandelte Form eines Pflanzmoduls 2', das sich hinsichtlich der Wasserversorgung der Pflanzen dahingehend unterscheidet, dass eine Versorgungsleitung 46 vorgesehen ist, die Tropfventile 48, 50, z.B. ein Tropfventil pro Schublade, aufweist. Dieser Aufbau ermöglicht es besonders bequem, die Pflanzen in den Schubladen 14, 20 zu versorgen, da ein Nachfüllen des Versorgungskastens 36, der dann entfällt, nicht mehr nötig ist. Vielmehr kann die Versorgungsleitung 46 an ein entsprechendes Pumpsystem angeschlossen werden. Zugleich ist es sehr einfach möglich, die Tropfventile 48, 50 einstellbar auszuführen, so dass für jeden Pflanzbehälter eine individuelle Versorgung eingestellt werden kann.

Die Fig. 1 bis 5 zeigen Ausführungsformen, bei denen die Schubladen 14, 20 an der Frontplatte 8 eingehängt werden und sich an der Rückwand 28 abstützen. Dies ist nicht die einzige Möglichkeit. Beispielsweise ist es gleichermaßen möglich, die Schubladen 14, 20 auf mindestens einer Führungsschiene zu führen, die an der Frontplatte 8 angebracht ist, optional zusätzlich auch an der Rückwand 28. Dieser Ansatz hat den Vorteil, dass Schubladen unterschiedlicher Tiefe eingesetzt werden können, da die Schubladen 14, 20 sich nicht zwingend an der Rückwand 28 abstützen müssen.

Natürlich kann die innen verfügbare Tiefe jeder Schublade 14, 20 auch beim Konzept gemäß Fig. 1 bis 5 variiert werden, indem an der Rückwand 28 und/oder der Rückseite 24, 26 jeder Schublade 14, 20 ein entsprechender Abstandshalter vorgesehen ist, über den sich die Schaublade 14, 20 dann an der Rückwand 28 abstützt, auch wenn sie nicht die Länge von ihrer Front 12, 18 zu ihrer Rückseite 24, 26 hat, die nötig wäre, damit sich die Schublade 14, 20 direkt mit ihrer Rückseite 24, 26 an der Rückwand 28 abstützt.

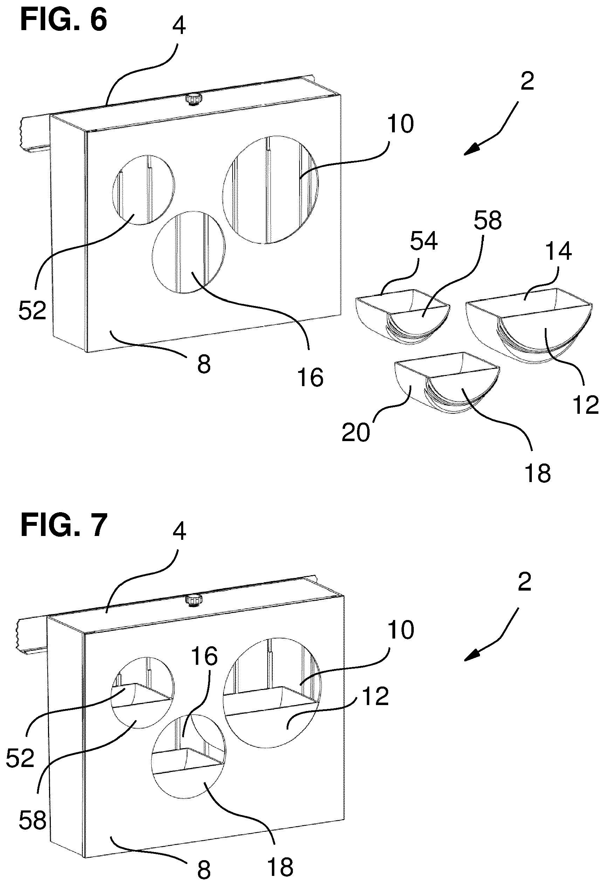

Fig. 6 zeigt schematisch, dass das Pflanzmodul 2 über Öffnungen 10, 16 und hier auch 52 unterschiedlicher Größe verfügen kann. In der Ausführungsform der Fig. 6 sind die Öffnungen 10, 16, 52 rein exemplarisch kreisförmig und haben unterschiedliche Durchmesser. Die Schubladen 14, 20, 54 sind mit ihrem Korpus auf die Größe der Öffnungen 10, 16, 52 angepasst, so dass sie in die Öffnungen eingeschoben werden können und dann jeweils mit ihrer Front 12, 18, 58 den unteren Teil der Öffnung 10, 16, 52 verschießen, so dass das Pflanzbodenmaterial in der Schublade 14, 20, 54 bereitgestellt ist. Fig. 7 zeigt diesen eingeschobenen Zustand.

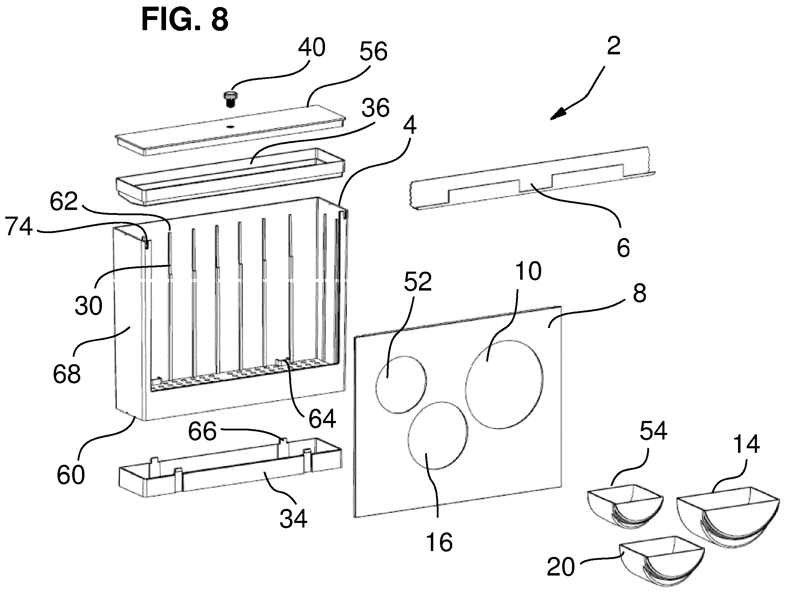

Fig. 8 verdeutlicht, dass das Pflanzmodul 2 modular aufgebaut ist. Der Container 4 ist hier als Rahmengehäuse 60 ausgeführt, an dessen Oberseite der Versorgungskasten 36 eingesetzt wird, welcher einen Deckel 56 aufweist, in dem die Belüftungsschraube 40 sitzt. An der Unterseite wird in das Rahmengehäuse 60 der Sammelkasten 34 für Abwasser eingesetzt, an der Rückwand die Schiene 6 angebracht.

Das Rahmengehäuse 60 ist so ausgestaltet, dass der Wasserversorgungskasten 36 und der Sammelkasten 34 so eingefügt werden können, dass sie im eingesetzten Zustand nicht erkennbar sind. Dazu ist der Versorgungskasten 36 mit Ausmaßen versehen, die ein Einsetzen in das Rahmengehäuse 60 von oben her erlauben. Die Stege 30 sind dazu mit Absätzen 62 versehen, auf denen der Versorgungskasten 36 sich abstützt, so dass er nicht in das Innere des Rahmengehäuses 60 hineinfällt.

Für den Sammelkasten 34 sind an der Unterseite entsprechende Aufnahmen 64 für Klipse 66 vorgesehen, die am Sammelkasten 34 nach oben ragen. Auf diese Weise kann der Sammelkasten 34 von unten in das Rahmengehäuse 60 eingeschoben und dort eingeklippst werden.

Die Seitenwände 68 des Rahmengehäuses 60 sind dabei bevorzugt so gestaltet, dass der aufgesetzte Versorgungskasten 36 bzw. der von unten eingeklippste Sammelkasten 34 nicht sichtbar sind, d.h. insbesondere nicht nach unten oder oben über das Rahmengehäuse 60 hinausragen. Dies hat nicht nur ästhetische Gründe, sondern ist auch unter Reinigungsgesichtspunkten vorteilhaft, da an den Seitenwänden 68 des Rahmengehäuses 60 keine Spalten bestehen.

Zudem erlaubt der Aufbau der Fig. 8 es auch, mehrere Pflanzmodule 2 übereinander anzuordnen, aber nur im obersten Pflanzmodul einen Versorgungskasten 36 und nur am untersten Pflanzmodul einen Sammelkasten 34 vorzusehen. Dann wird eine Vielzahl von Pflanzmodulen 2 einfach kombiniert, um eine größere Pflanzwand 69 zu schaffen. In der Regel wird dann nur am untersten Container 4 der Sammelkasten 34 angebracht und am obersten Container 4 der Versorgungskasten 36. Dies ist bei unverändertem und identischem Rahmengehäuse 60 möglich.

Darüber hinaus ist es auch möglich, einzelne Rahmengehäuse ohne Frontplatte 8 zu belassen, beispielsweise um einen Dekorationskasten zu schaffen, der sich zwischen mehreren bepflanzten Pflanzmodulen mit Frontplatte befindet. Die Frontplatte 8 wird an der Vorderseite des Containers 4 lösbar angebracht. Dann werden die Schubladen 14, 20, 54 bepflanzt und eingesetzt.

Der modulare Aufbau gemäß Fig. 8 hat weiter den Vorteil, dass verschiedenste Fronten 8 kombiniert werden können, insbesondere mit unterschiedlichen Formen, Anordnungen und Größen von Öffnungen 10, 16, 52.

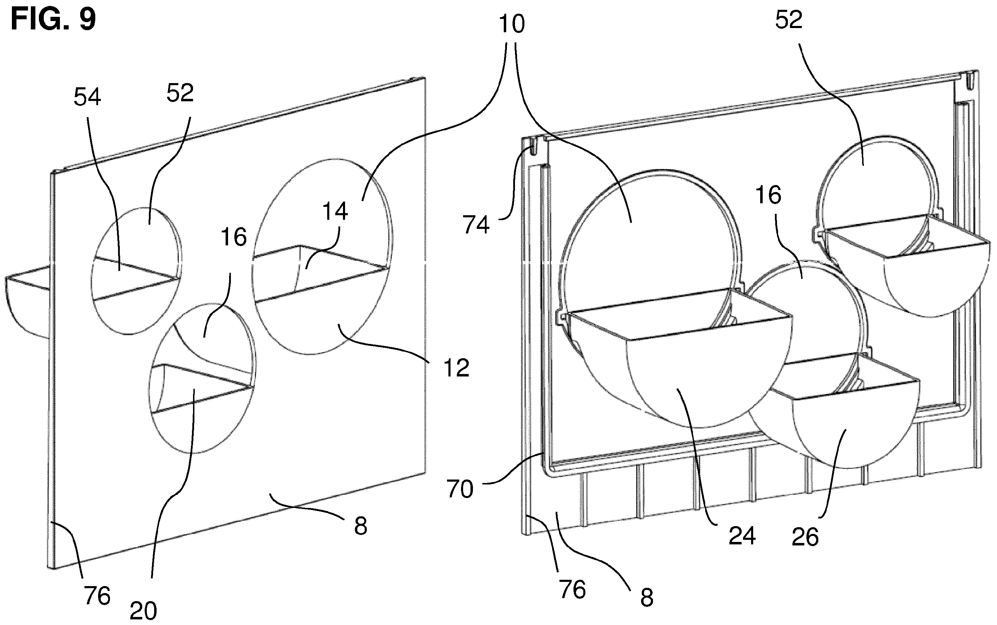

Fig. 9 zeigt in einer perspektivischen Ansicht von vorne sowie von hinten die Frontplatte 8 mit eingesetzten Schubladen 14, 20, 54. Zusätzlich ist zu erkennen, dass die Frontplatte 8 an ihrer Innenseite eine U-förmig umlaufende Hakenleiste 70 aufweist, die zum Einhaken der Frontplatte 8 an der Öffnung des Rahmengehäuses 60 des Containers 4 ausgebildet ist. Die Frontplatte 8 weist dazu an ihrer Rückseite (in Fig. 9 rechts dargestellt) die Hakenleiste 70 oder eine entsprechende Haltenut auf, mit der die Frontplatte 8 von oben in die U-förmige Öffnung des Rahmengehäuses 60 eingeschoben wird, bis eine Rastnase 72 in eine entsprechende Ausnehmung 74 am Rahmengehäuse 60 (siehe Fig. 8) eingreift. Zusätzlich ist es natürlich möglich, aber nicht explizit dargestellt, dass die beschriebenen Schubladen 14, 20, 54 auch in die Öffnungen 10, 16, 52 eingeschoben werden können, wenn die Frontplatte 8, wie im weiteren Verlauf noch detailliert beschrieben wird, von vorne auf den Container 4 aufgesetzt wird und mittels Montageelementen und Gegenelementen am Container 4 fixiert wird.

Eine Zusammenschau der Fig. 8 und 3 zeigt eine bevorzugte Eigenschaft, dergemäß das Rahmengehäuse 60 eine keilförmige Grundform hat. Wie z.B. Fig. 3 erkennen lässt, ist es ist an einem Ende (hier unten) um ein bestimmtes Maß weniger tief (Dimension senkrecht zur Wand, an der das Pflanzmodul aufgehängt wird) als am anderen Ende (hier oben). Dies erleichtert die Herstellung per Spritzguss, da das Entformen einfacher ist. Um dem Pflanzmodul 2 dennoch eine quaderförmige Geometrie zu verleihen, steht die Außenseite der Frontplatte 8 an dem (z.B. unteren) Ende, an dem das Rahmengehäuse 60 weniger tief ist, um das bestimmte Maß weiter vom Rahmengehäuse 60 vor, als an dem (z.B. oberen) Ende, an dem das Rahmengehäuse 60 die größere Tiefe hat. Gemäß Fig. 3 liegt die Innenseite der Frontplatte 8 oben am Rahmengehäuse 60 an und ist unten durch Abstandshalter 76 in einem Abstand gehalten, der dem Maß entspricht, um das sich das Rahmengehäuse 60 nach unten verjüngt.

Die Abstandshalter 76 sind bevorzugt an der Frontplatte 8 angebracht. Sie erstrecken sich bevorzugt entlang der Verjüngungsrichtung und sind ihrerseits die Verjüngung ausgleichend keilförmig, da dies ebenfalls das Entformen beim Spritzguss erleichtert. Sie können dann zudem auch den keilförmigen Spalt, der am Rand des Rahmengehäuses 60 zur Frontplatte 8 entstehen würde, schließen. Die Abstandshalter 76 können jedoch auch als separate Teile vorgesehen werden oder am Rahmengehäuse ausgebildet werden.

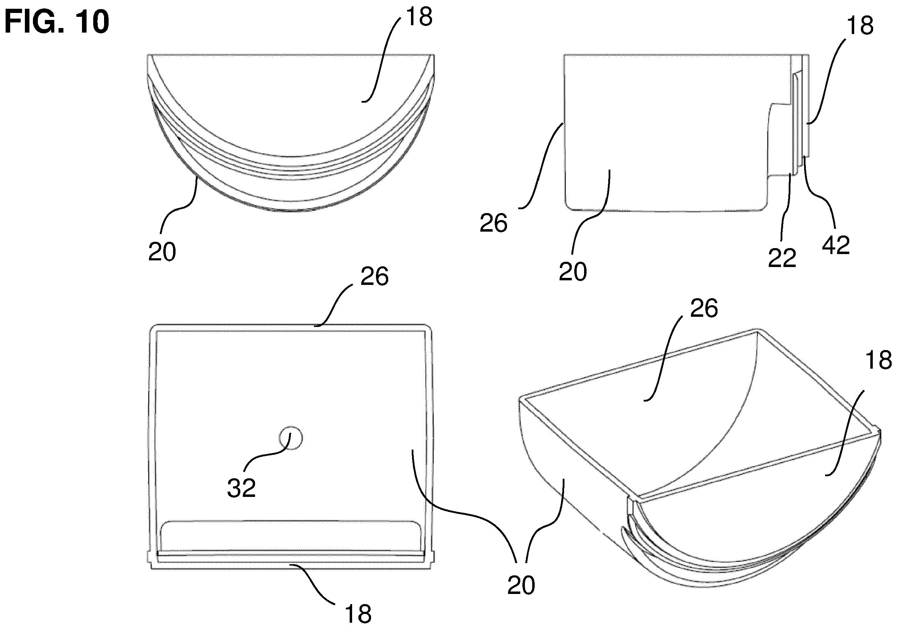

Fig. 10 zeigt exemplarisch die Schublade 20 in einer Ansicht von vorne, von links, perspektivisch bzw. von oben (im Uhrzeigersinn aufgeführt).

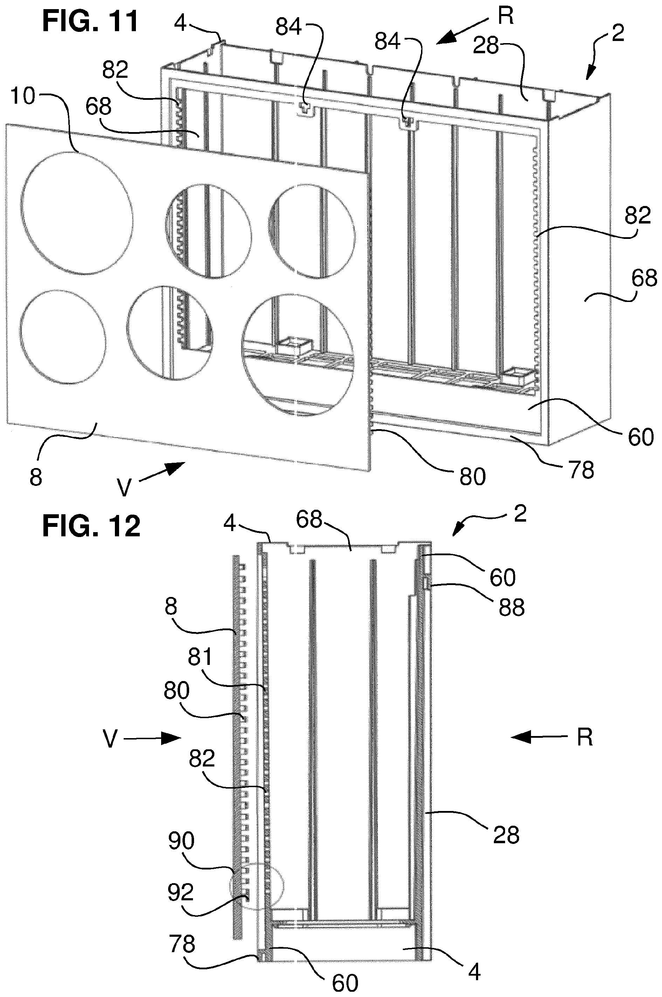

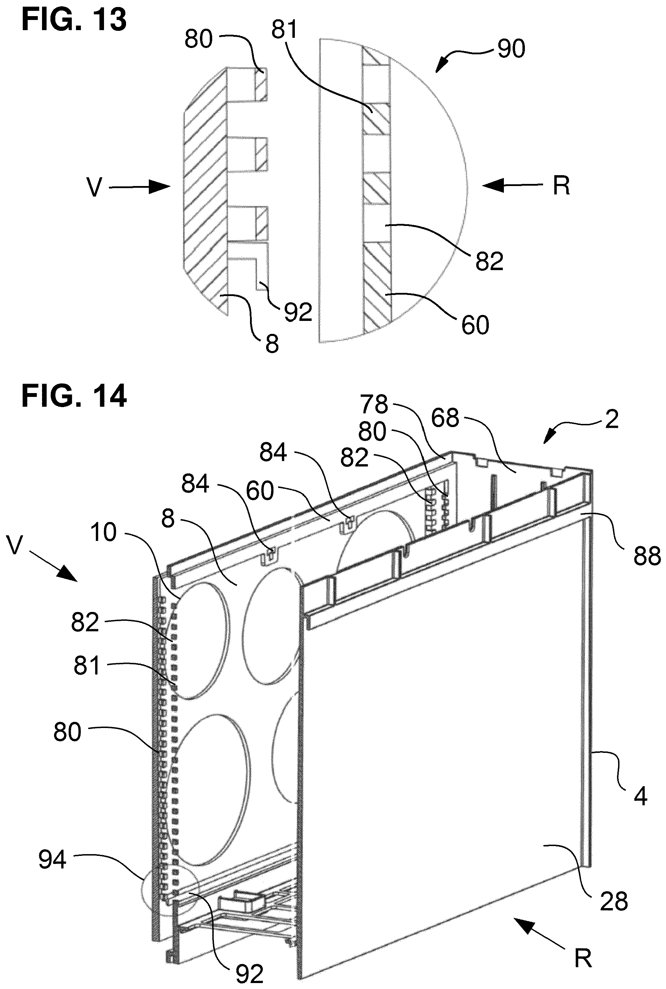

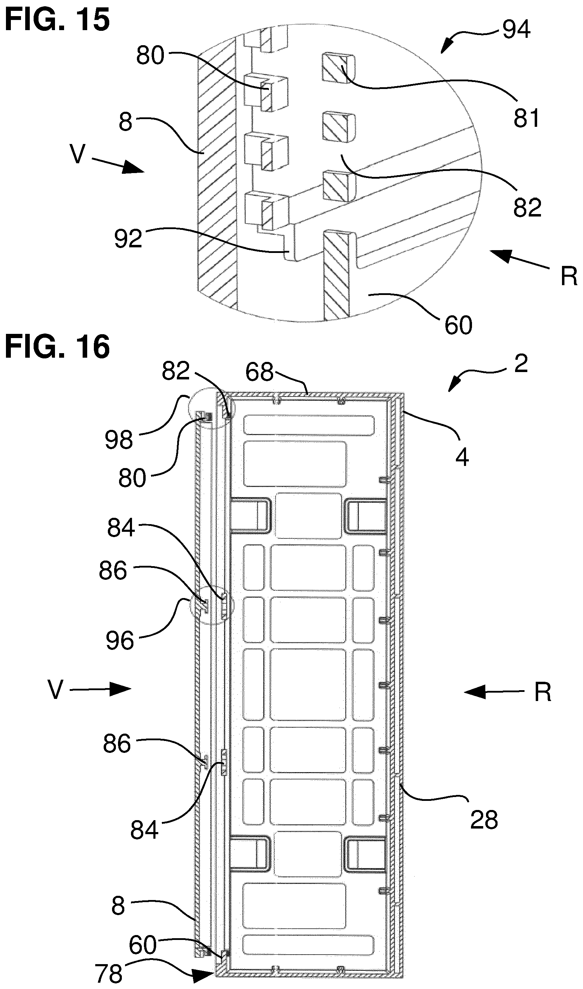

Fig. 11 zeigt eine weitere Ausgestaltung des Pflanzmoduls 2 in isometrischer Darstellung. Der Unterschied zur Ausführungsform der Fig. 8 liegt in der Befestigung der Frontplatte 8. Sich entsprechende Elemente sind mit denselben Bezugszeichen versehen, so dass sie nicht nochmals beschrieben werden müssen. Dasselbe Pflanzmodul 2 ist in Fig. 12 in seitlicher Schnittdarstellung, in Fig. 14 als isometrischer Schnitt und in Fig. 16 in Schnittdarstellung von oben dargestellt. Der Pfeil V kennzeichnet die Sicht von vorne auf eine Vorderseite des Pflanzmoduls 2 und der Pfeil R die Sicht von hinten auf eine Rückseite des Pflanzmoduls 2.

Das Pflanzmodul 2 umfasst einen Container 4, der wiederum das Rahmengehäuse 60, die Rückwand 28 und die Seitenwände 68 aufweist. Das Rahmengehäuse 60 bildet an der Vorderseite des Containers 2 einen, hier beispielhaft rechteckigen Rahmen 78, welcher die Frontplatte 8 nun vorstehend umgibt. Die Fig. 11, 12, 14 und 16 zeigen das Pflanzmodul 2 mit abgenommener Frontplatte 8.

Die Frontplatte 8 weist mehrere, z.B. zwei Öffnungen 10 auf und wird (wie es später noch näher erläutert wird) lösbar am Container 4 befestigt. Hierzu ist an einer zum Container 4 gewandten Rückseite der Frontplatte 8 eine Vielzahl von Rasthaken 80 als Montageelemente vorgesehen. Diese Rasthaken 80 korrespondieren mit einer Vielzahl an Rastöffnungen 82, die zwischen Raststegen 81 gebildet sind, welche seitlich am Rahmengehäuse 60 ausgebildet sind und als Gegenelemente zu den Rasthaken 80 wirken. Zusätzlich sind am oberen Ende des Rahmengehäuses 60 zwei Aufnahmen 84 ausgeformt. Zu den Aufnahmen 84 korrespondieren zwei Sicherungshaken 86, welche an der Rückseite der Frontplatte 8 vorstehen. Sie sind in Fig. 11 nicht erkennbar, jedoch in Fig. 16. An der Rückwand 28 ist eine Schiene 88 vorgesehen, welche zur Aufhängung des Pflanzmoduls 2 an einer Wand dient (Fig. 12).

Die Fig. 13 zeigt ein erstes Detail 90 der Rasthaken 80 (Montageelemente) und Rastöffnungen 82 mit Raststegen 81 (Gegenelemente) an der Frontplatte 8, welche von vorne an die Vorderseite des Rahmengehäuses 60 angenähert wird. Dargestellt sind die Rasthaken 80, die Raststege 81, die Rastöffnungen 82 und eine Einhängeleiste 92.

In Fig. 14 ist das Annähern der Frontplatte 8 an das Rahmengehäuse 60 des Containers 4 aus einer anderen Perspektive ersichtlich. Das Rahmengehäuse 60 ist so geschnitten, dass die Raststege freischwebend erscheinen.

Fig. 15 zeigt das zweite Detail 94 aus Fig. 14 und stellt damit die Annäherung der Frontplatte 8 an das Rahmengehäuse 60 des Containers 4 detailliert dar. Die Rasthaken 80 werden auf die Rastöffnung 82 hinbewegt. Die Einhängeleiste 92 befindet sich unten und erstreckt sich etwa über 90% der Länge der Frontplatte 8. Sie kann so direkt am Rahmengehäuse 60 eingehakt werden, so dass ein unterer Rand des Rahmengehäuses 60 ein Gegenelement darstellt.

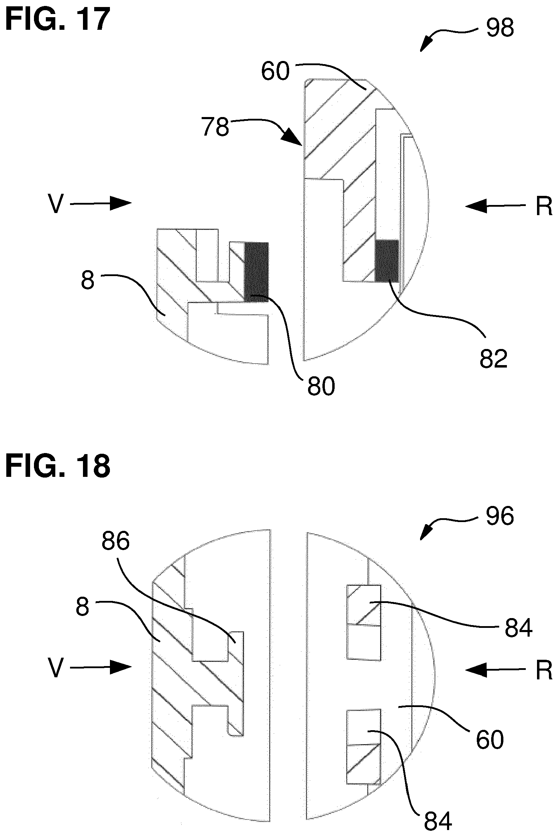

Fig. 16 zeigt das Pflanzmodul 2 in geschnittener Ansicht von oben. Aus dieser Perspektive sind die beiden Sicherungshaken 86 erkennbar, welche in die beiden Aufnahmen 84 eingesetzt werden - die Frontplatte 8 befindet sich in derselben Position wie in den vorangegangenen Ausführungsbeispielen. Dies ist in einem dritten Detail 96 in Fig. 18 dargestellt. Dort ist es auch ersichtlich, dass der Querstrich des T-förmigen Querschnittes der Sicherungshaken 86 so groß ist, dass der Sicherungshaken 86 durch den Querstrich der T-förmigen Aufnahme 84 eingeschoben werden kann. Ein viertes Detail 98 zeigt in Fig. 17 das Einsetzen der Rasthaken 80 in die Rastöffnungen 82 von oben.

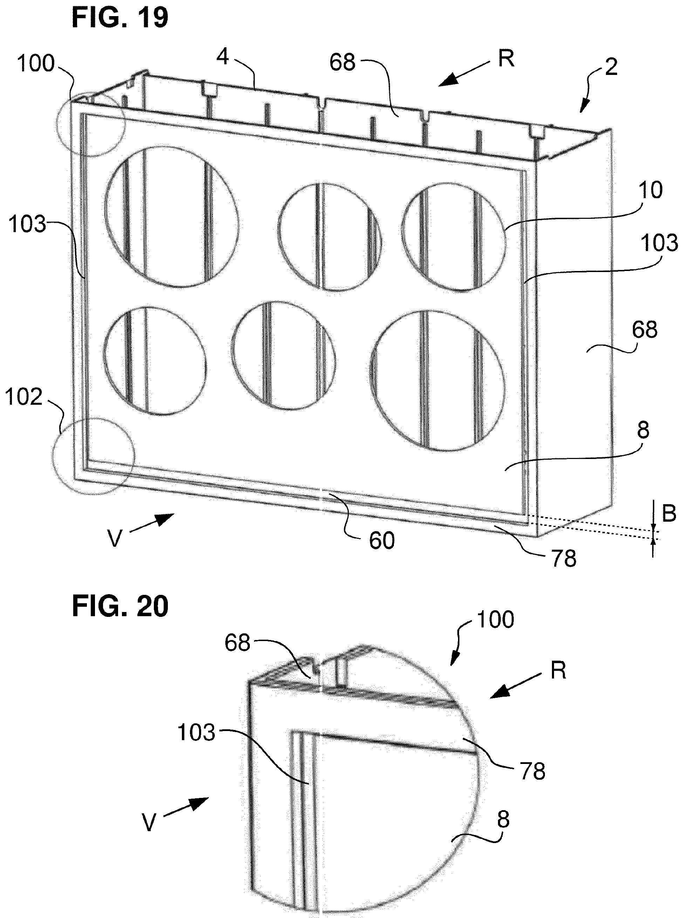

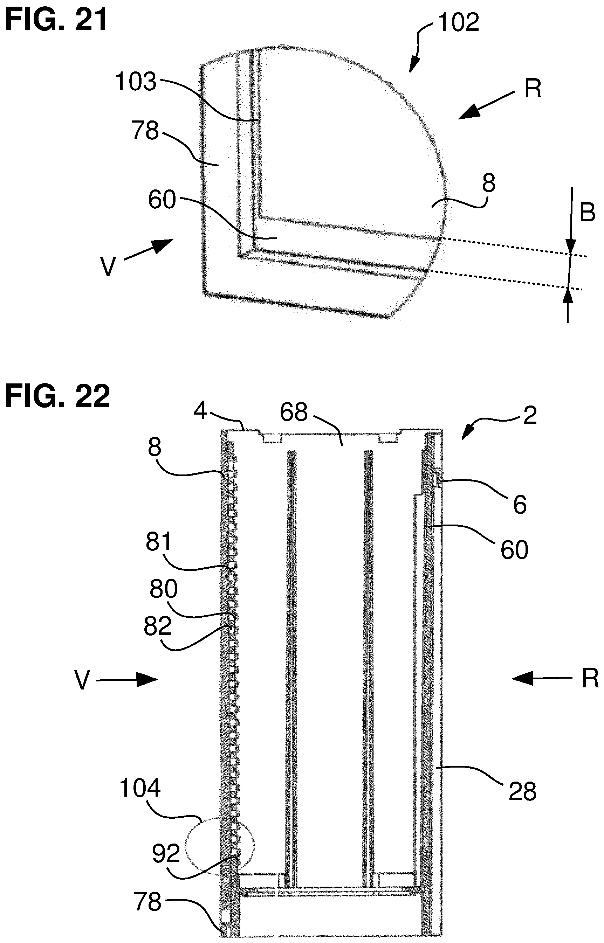

Fig. 19 zeigt das Pflanzmodul 2 in der isometrischen Darstellung mit nun an das Rahmengehäuse 60 angelegter Frontplatte 8. Die Fig. 20 zeigt ein fünftes Detail 100, welches die linke obere Ecke des Pflanzmoduls 2 darstellt, und die Fig. 21 zeigt ein sechstes Detail 102, welches die linke untere Ecke des Pflanzmoduls 2 darstellt. Es ist zu erkennen, dass in diesem Vormontagezustand die Frontplatte 8 an der oberen Innenseite des Rahmens 78 anliegt. Zwischen dem unteren Ende der Frontplatte 8 und der unteren Innenseite des Rahmens 78 am Rahmengehäuse 60 ist eine Beabstandung B zu erkennen. Hier zeigt sich, dass der innere Umriss des Rahmens 78 größer ist als der Außenumriss der Frontplatte, mindestens um ein Maß, das es erlaubt, die Montageelemente zum Verrasten mit den Gegenelementen parallel zur Frontplattenerstreckung zu verschieben. Dieser Verschiebeweg ist durch die konstruktive Gestaltung der Montage-/Gegenelemente vorgegeben, z.B. die Höhe der Einhängeleiste und/oder einen Einrastweg der Rastelemente. In der gezeigten Ausgestaltung ist der Einrastweg nach unten durch die Bauteile 92 und 84 begrenzt. Dies ist aber nicht zwingend und der Einrastweg könnte nach unten auch durch eine geeignete Ausgestaltung der Rasthaken 80 / Rastöffnungen 82 bzw. der dazwischenliegenden Raststege 81 begrenzt sein.

Der Rahmen 78 und die Frontplatte 8 bilden zusammen eine Schattenfuge 103, die sich nach dem Verschiebeweg, welcher zum Einrasten ausgeführt wird, allseitig zwischen Rahmen 78 und Frontplatte 8 zeigt. Die Beabstandung B entspricht also der Summe aus Schattenfugenbreite A und Verschiebeweg.

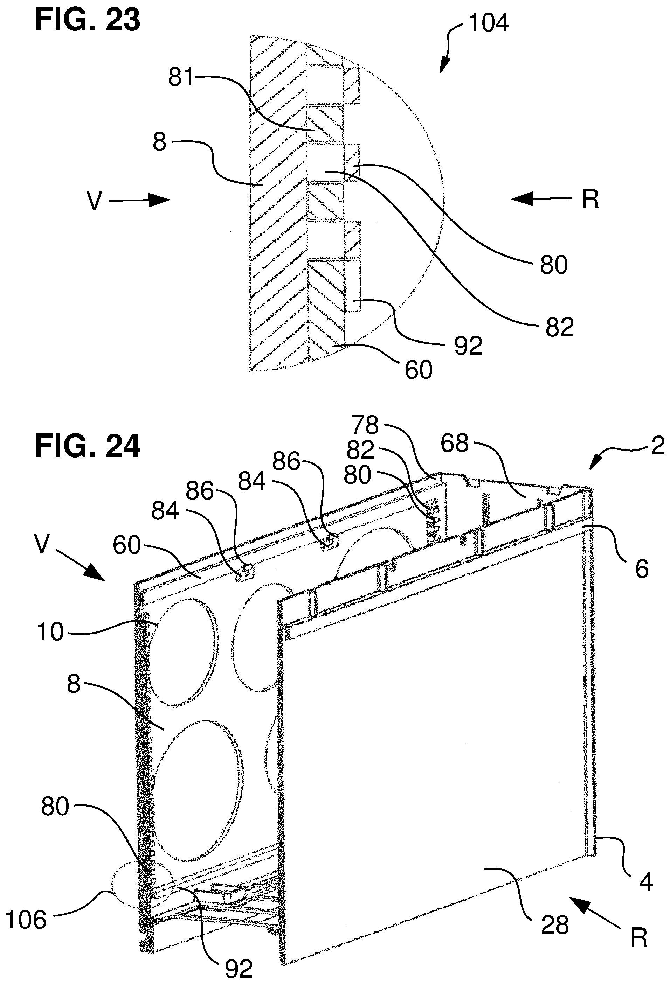

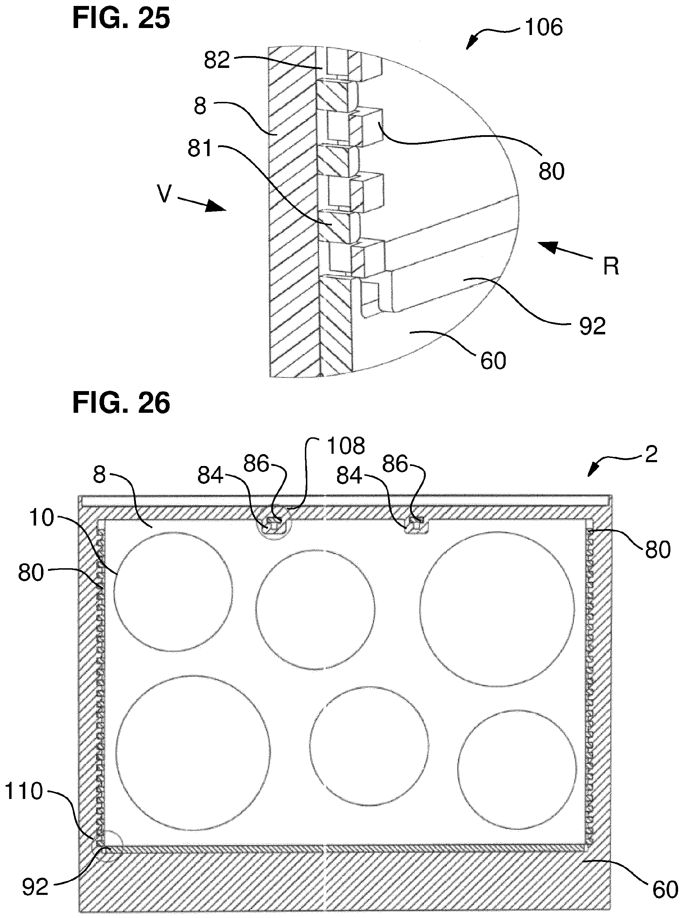

Fig. 22 und 24 zeigen den Container mit geschnitten gezeigter, angelegter Frontplatte 8. Ein siebtes Detail 104 (Fig. 23) und ein achtes Detail 106 (Fig. 25) zeigen, wie die Rasthaken 80 in die Rastöffnung 82 zwischen den Raststegen 81 eingreifen. Die Einhängeleiste 92 greift hinter das Rahmengehäuse 60, so dass sie im weiteren Verlauf durch eine Bewegung nach unten, also den Verschiebeweg, am Rahmengehäuse 60 einhakt.

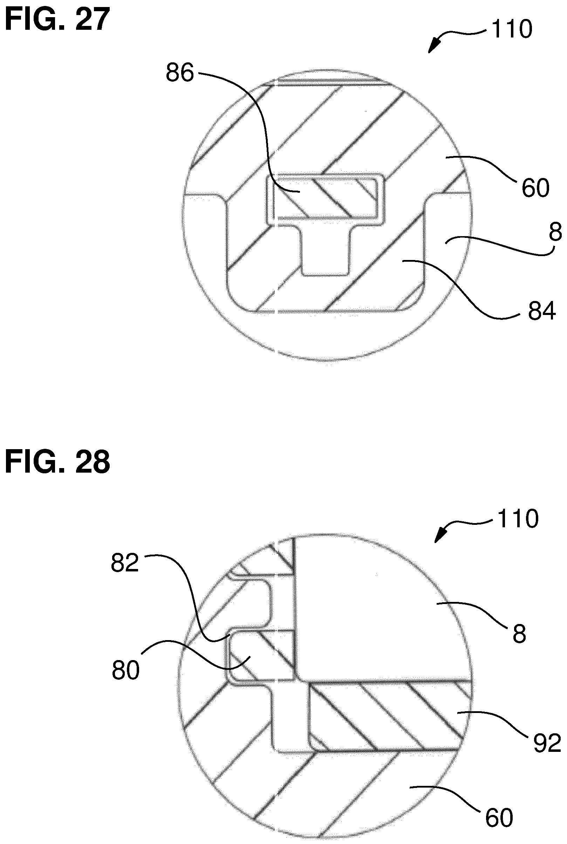

Fig. 26 stellt das Pflanzmodul 2 mit angelegter Frontplatte 8 in Schnittdarstellung von der Rückseite dar. Ein neuntes Detail 108 (Fig. 27) und ein zehntes Detail 110 (Fig. 28) zeigen, wie bei Anlage der Frontplatte 8 an das Rahmengehäuse 60 die T-förmigen Sicherungshaken 86 in die Aufnahmen 84, welche T-förmig sind, eingreifen. Die Montageelemente sichern in Richtung senkrecht zur Frontplatte 8 noch nicht - die Frontplatte 8 kann in diesem angelegten Zustand noch nach vorne wieder vom Rahmengehäuse 60 abgenommen werden.

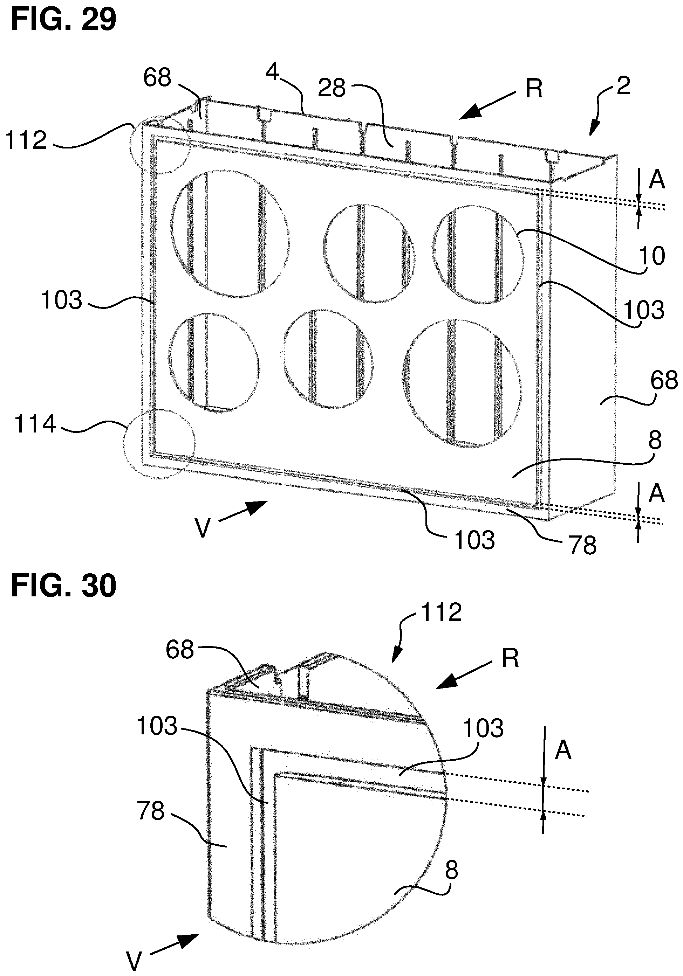

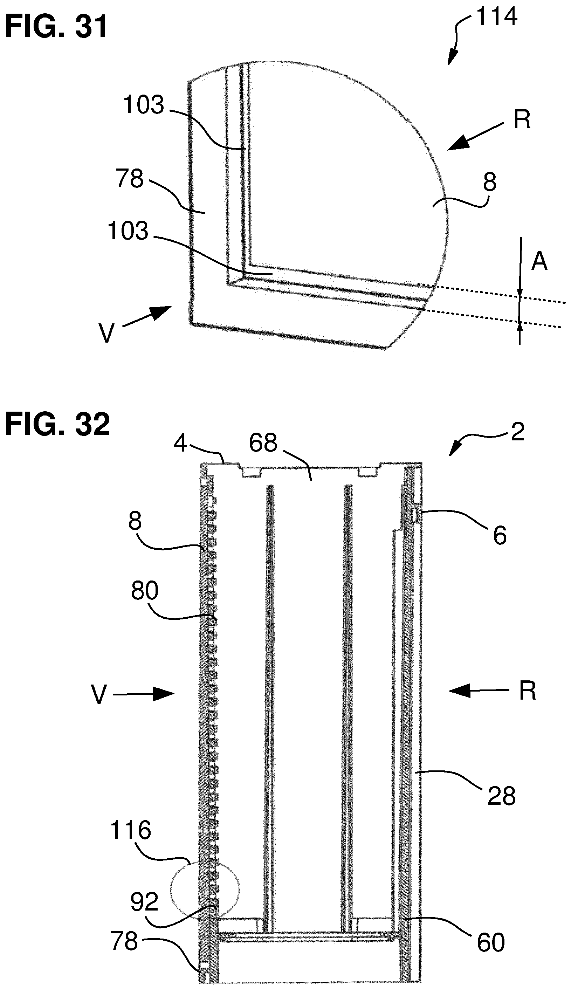

In Fig. 29 ist nun die Frontplatte 8 am Rahmengehäuse 60 nach unten geschoben und fixiert, so dass sie nicht mehr nach vorne abgenommen werden kann. Ein elftes Detail 112 (Fig. 30) und ein zwölftes Detail 114 (Fig. 31) verdeutlichen, dass die Frontplatte 8 nicht mehr mit ihrem oberen Rand an der oberen Innenkante des Rahmens 78 anliegt, sondern dass ein der Schattenfuge 103 entsprechender Abstand A zwischen dem oberen Rand der Frontplatte 8 und der oberen Innenkante des Rahmens 78 vorliegt. Zwischen dem unteren Rand der Frontplatte 8 und der unteren Innenkante des Rahmens 78 ist die Beabstandung B reduziert, so dass ebenfalls der Abstand A, also die Schattenfuge 103, vorliegt. Im fixierten Zustand deckt die Frontplatte 8 etwa 90% der Front des Pflanzmoduls 2 ab. Die restliche Front des Pflanzmoduls 2 sind der Rahmen 78 und die Schattenfuge 103, die bevorzugt die Frontplatte 8 umläuft.

Zur Montage wird also die Frontplatte 8 von vorne an das Rahmengehäuse 60 angelegt und durch ein nach unten Schieben der Frontplatte 8 fixiert. Bei dieser Verschiebung wird die Beabstandung B auf den Abstand A, also die Breite der Schattenfuge 103, reduziert. Wie nachfolgend anhand der weiteren Figuren noch genauer erläutert wird, wirken im fixierten Zustand die beschriebenen Montageelemente und Gegenelemente zusammen und fixieren in Kombination die Frontplatte 8 am Rahmengehäuse 60.

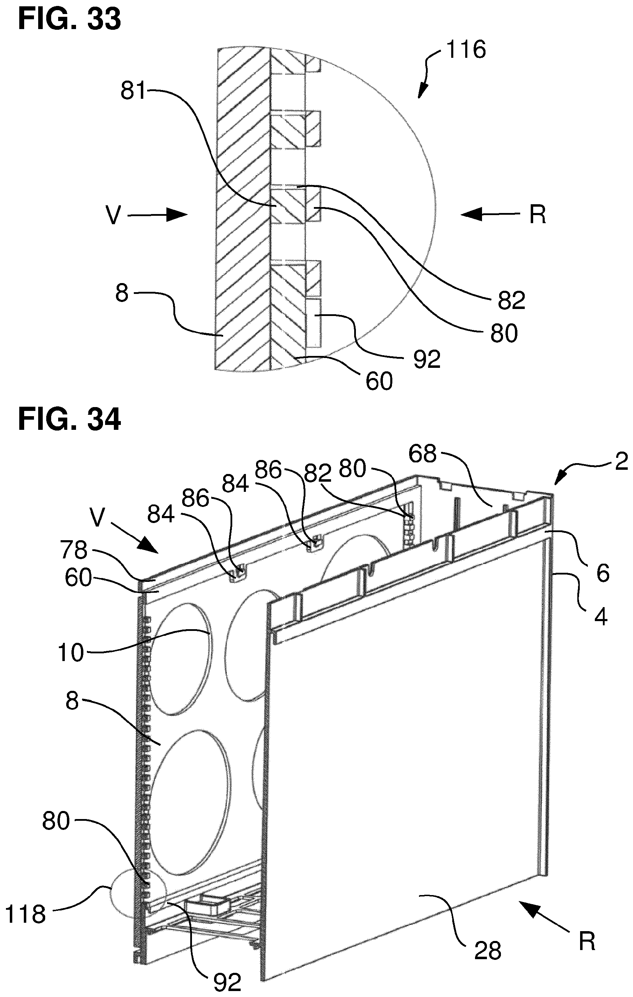

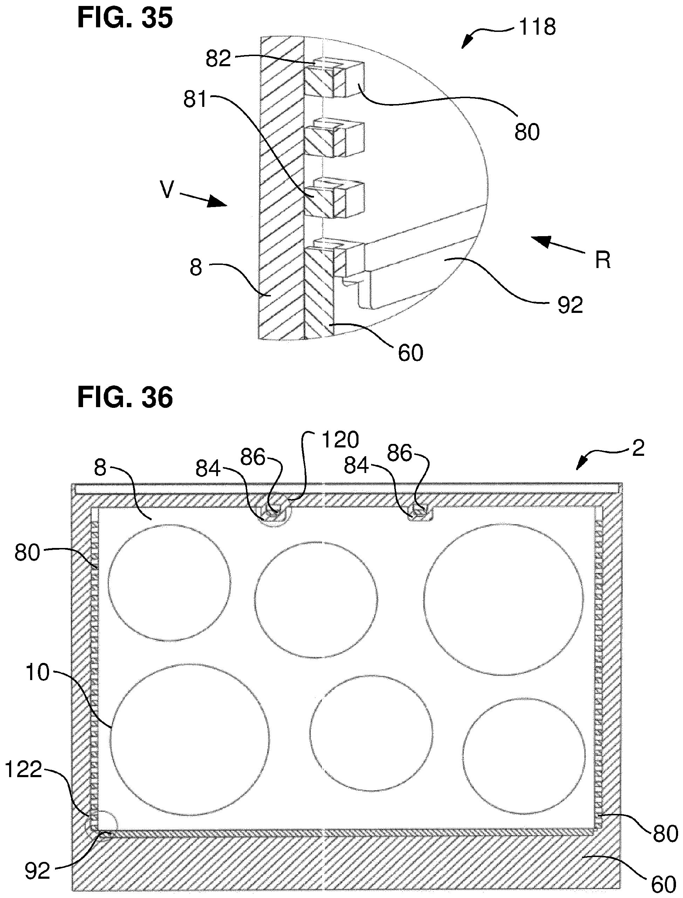

Fig. 32 und 34 zeigen in Schnittdarstellung die fixierte Frontplatte 8. Ein dreizehntes Detail 116 (Fig. 33) zeigt, ebenso wie ein vierzehntes Detail 118 (Fig. 35), wie sich bei fixierter Frontplatte 8 die Rasthaken 80 an den Raststegen 82 einhaken und sich mit diesen Verklemmen. Die Einhängeleiste 92 hakt aufgrund ihres L-förmigen Querschnitts am Rahmengehäuse 60 ein.

Zusätzlich zu den Rasthaken 80 können am Rahmengehäuse 60 und an der Frontplatte 8 Magnete vorgesehen sein (nicht explizit dargestellt), welche als Gegenpole wirken, so dass sie sich gegenseitig anziehen und so die Frontplatte 8 am Rahmengehäuse 60 fixieren. In dieser Ausführungsform ist die Schattenfuge 103 nicht zwingend erforderlich.

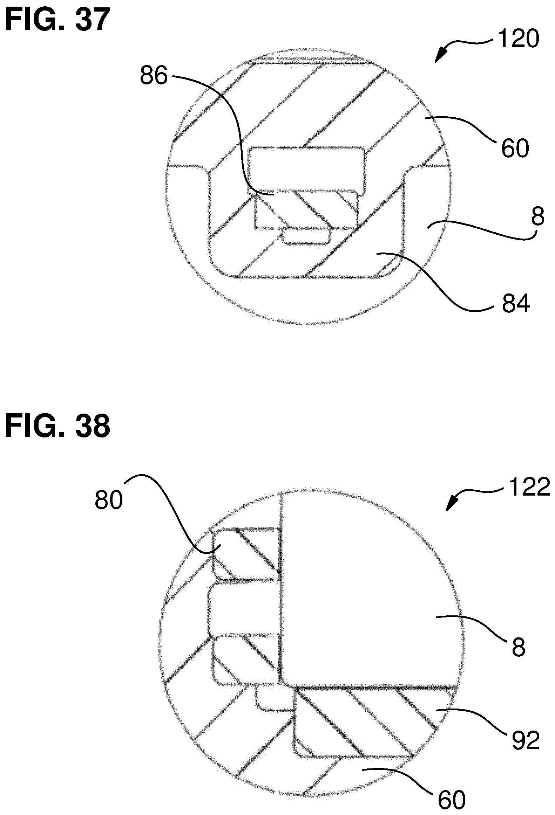

Fig. 36 stellt das Pflanzmodul 2 mit fixierter Frontplatte 8 in Schnittdarstellung von der Rückseite gesehen dar. Ein fünfzehntes Detail 120 (Fig. 37) und ein sechzehntes Detail 122 (Fig. 38) lassen erkennen, dass bei Fixierung der Frontplatte 8 am Rahmengehäuse 60 die T-förmigen Sicherungshaken 86 in die Aufnahmen 84 einrasten (s.o.).

Der Verschiebeweg, um den die Frontplatte 8 vom angelegten in den fixierten Zustand geschoben wird, ist so gering, dass sich die Frontplatte 8 stets innerhalb des äußeren Umrisses des Containers 4 befindet. Die Einhängeleiste 92 hakt nach Fixierung durch Verschiebung um den Verschiebeweg am Rahmengehäuse 60 ein.

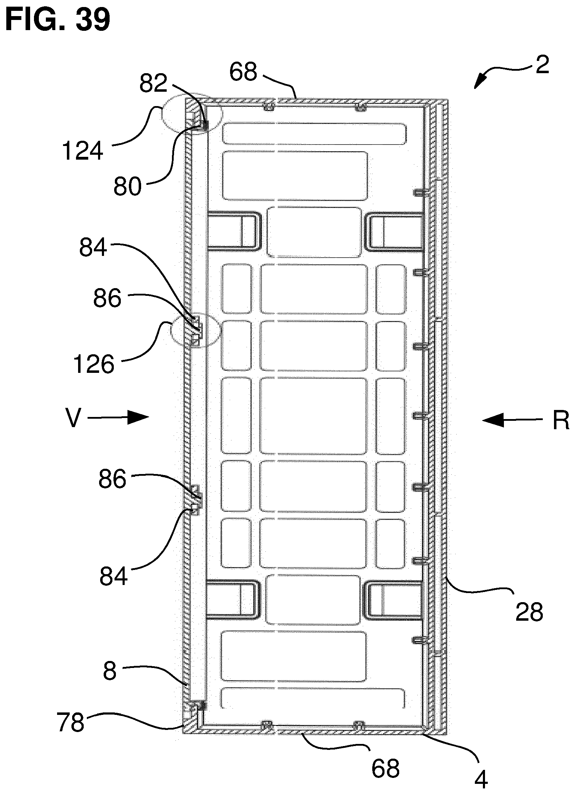

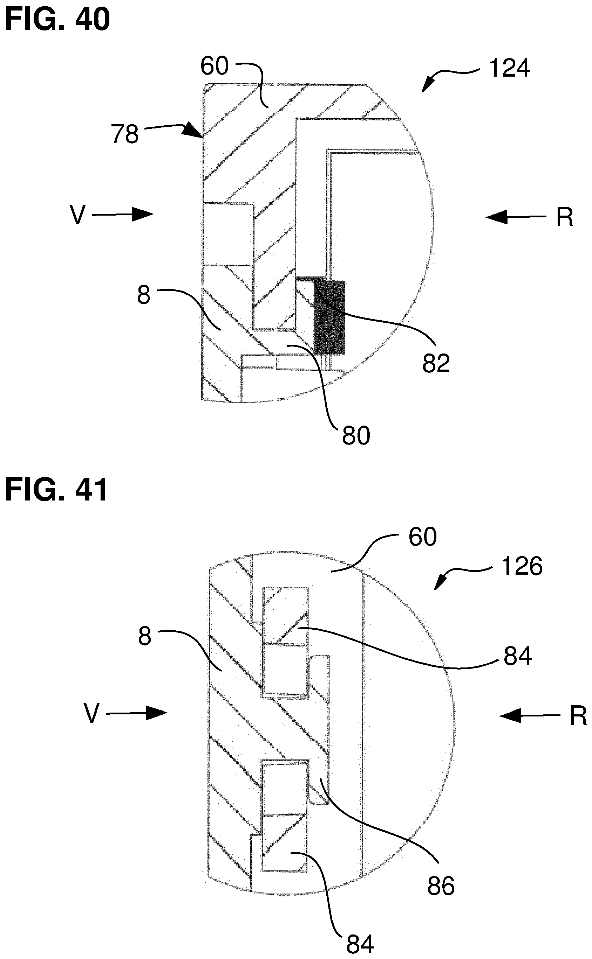

Fig. 39 zeigt, wie zuvor schon Fig. 16, das Pflanzmodul 1 in Schnittdarstellung von oben. Ein siebzehntes Detail 124 (Fig. 40) und ein achtzehntes Detail 126 (Fig. 41) zeigen die beiden Sicherungshaken 86, welche in die beiden Aufnahmen 84 eingerastet sind; die Frontplatte 8 ist am Rahmengehäuse 60 des Containers 4 fixiert.

Die beschriebenen Montageelemente sorgen zusammen mit den Gegenelementen für die Fixierung der Frontplatte 8 in dreifacher Art und Weise. Die Frontplatte 8 ist gegen eine Verschiebung nach links oder rechts und gegen eine Verschiebung nach unten abgesichert. Nach oben sichert die Klemmung der Raststrukturen. Ebenso kann die Frontplatte 8 nach ihrer Fixierung am Rahmengehäuse 60 des Containers 4 nicht nach vorne abgehoben werden. Eine Fixierung zwischen Montageelementen und Gegenelementen ist in diesem Ausführungsbeispiel durch Klemmung bzw. Anschlag realisiert. Nur eine einzige Bewegung erlaubt es, die Frontplatte 8 wieder vom Container 4 zu lösen, und zwar der umgekehrte Verschiebeweg nach oben. Entscheidend dabei ist, dass zum Lösen eine Kraft aufgebracht werden muss, welche größer ist als die Klemmkraft zwischen den Raststrukturen. Wird die Frontplatte 8 nach oben geschoben, schlägt sie mit ihrem oberen Ende an der oberen Innenseite des Rahmens 78 an, so dass sich dann die Rasthaken 80 wieder zwischen den Raststegen 81 in den Rastöffnungen 82 befinden. Die Sicherungshaken 86 befinden sich dann wieder hinter dem breiten Ausschnitt der T-förmigen Aufnahme 84 und der Einhängeleiste 92 befindet sich ausgehakt innerhalb des Rahmengehäuses 60. Alle Montagelemente sind dann von ihrem jeweiligen Gegenelement gelöst und die Frontplatte 8 kann nach vorne vom Rahmengehäuse 60 des Containers 4 abgenommen werden.

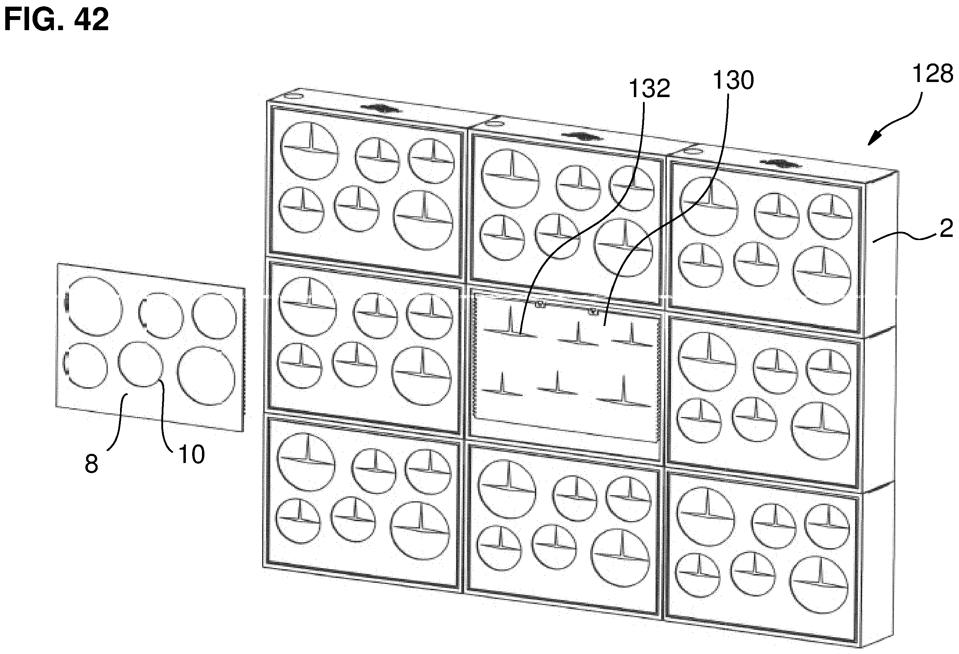

Fig. 42 zeigt eine Pflanzwand 128, in der mehrere Pflanzmodule 2 übereinander gestapelt sind, in isometrischer Darstellung. Von einem mittleren Pflanzmodul 2 ist die Frontplatte 8 abgenommen. Dies ist durch die beschriebene Befestigung möglich, ohne die Pflanzwand zerlegen zu müssen. Es ist weiter ein optionales Vlies 130 an der Vorderseite des Containers 4 mit der abgenommenen Frontplatte 8 erkennbar, und im Vlies 130 sind Schlitze 132 vorgesehen. Das Vlies 130 schützt gegen eine Wucherung des Wurzelwerks der später eingesetzten Pflanzensprosse und die Schlitze 132 ermöglichen einen gerichteten Austritt der Pflanzensprosse durch die Öffnungen 10.

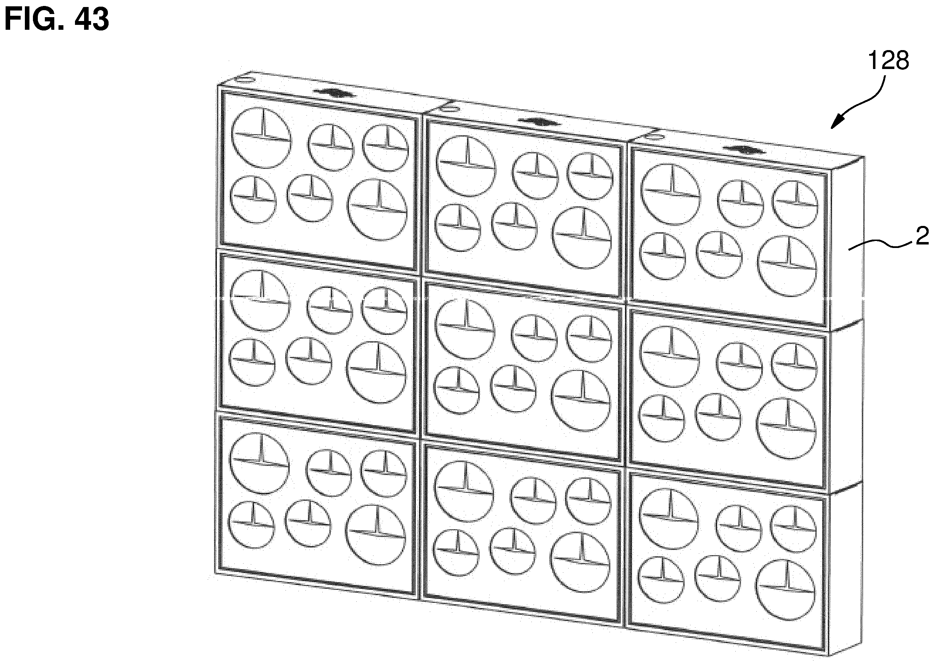

Fig. 43 zeigt die Pflanzwand 128 in isometrischer Darstellung. Nun ist die Frontplatte 8 wieder am mittleren Pflanzmodul 2 fixiert.

In den Fig. 42 und 43 ist es ersichtlich, dass die Frontplatte 8 nicht fest mit dem Rahmengehäuse 60 verbunden ist. Sie wird dabei in Art eines Schiebedeckels über das gesamte Pflanzmodul 2 verschoben. Beim Befestigen und Lösen der Frontplatte 8 am Rahmengehäuse 60 wird vielmehr der äußere Umriss des Containers 4 nicht überschritten. Dies ermöglicht die gezeigte Demontage der Frontplatte 8, wenn das Rahmengehäuse 60 des Pflanzmoduls 2 bereits mit weiteren Pflanzmodulen 2 zu einer Pflanzwand 128 verbunden ist. Es ist zur Montage oder Demontage der Frontplatte 8 kein zusätzlicher Platz außerhalb des Umrisses des Containers 4, also oberhalb, unterhalb oder an den Seiten des Containers 4 erforderlich, so dass zur Montage oder Demontage der Frontplatte 8, das Pflanzmodul 2 nicht zunächst aus der Pflanzwand 128 ausgebaut werden muss, was in Anbetracht der Wasserversorgung des Pflanzmoduls 2 bzw. der Pflanzwand 128 sehr aufwändig sein kann. Dieser modulare Aufbau der Pflanzmodule 2 hat weiter den Vorteil, dass verschiedenste Frontplatten 8 in einer Pflanzwand 128 kombiniert werden können, insbesondere mit unterschiedlichen Formen, Anordnungen und Größen von Öffnungen 10.

Die Ausführungsbeispiele zeigen eine allseitige Schattenfuge 103. Diese ist optional; es genügt, wenn für den Verschiebeweg Spielraum besteht. Bei Montage-/Gegenelementen, die nur aus Magneten etc. bestehen, kann auch dieser Spielraum entfallen.

Besonders die Fig. 22 und 32 lassen gut erkennen, dass das Rahmengehäuse 60 einen keilförmigen Querschnitt hat, so dass es leicht per Spritzguss zu fertigen und hierbei gut entfernt werden kann. Die Frontplatte 8 gleicht die Keilform zur Quaderform des Pflanzmoduls 2 aus, indem sie gegenläufig keilförmig ist.

## Patentansprüche

1. Pflanzmodul für einen hängenden Garten, das aufweist:
- einen Container (4) mit einer Frontplatte (8), die mind. eine Öffnung (10, 16, 52) für einen Pflanzenspross aufweist,
wobei
- die Frontplatte (8) mindestens zwei Öffnungen (10, 16, 52) für je einen Pflanzenspross aufweist und im wandmontierten Zustand lösbar am Container (4) befestigt ist, und
- der Container (4) eine zur Wandmontage ausgebildete Rückwand (28), einen Deckel (56), einen Boden und zwei Seitenwände (68) aufweist, wobei der Deckel (56), der Boden und die Seitenwände (68) - gesehen auf die Rückwand (28) - einen äußeren Umriss des Containers (4) definieren, und Befestigungsmittel zur lösbaren Montage der Frontplatte (8) am Container (4) an der zum Container (4) weisenden Seite der Frontplatte (8) angebrachte oder ausgebildete Montageelemente und am Container (4) angebrachte oder ausgebildete Gegenelemente aufweisen, die mit den Montageelementen so zusammenwirken, dass die Frontplatte (8) über einen Montageweg am Container (4) befestigbar ist, bei dem, gesehen auf die Rückwand (28), ein Außenumriss der Frontplatte (8) stets innerhalb des äußeren Umrisses des Containers (4) bleibt, **dadurch gekennzeichnet, dass** der Montageweg einen längs der Frontplatte verlaufenden Verschiebeweg von bevorzugt 1 cm oder weniger aufweist, um die Montageelemente und die Gegenelemente in fixierenden Eingriff zu bringen, wobei ein Außenumriss der Frontplatte (8) in Richtung des Verschiebewegs mindestens um die Länge des Verschiebewegs kleiner ist als der äußere Umriss des Containers (4).

2. Pflanzmodul nach Anspruch 1, wobei der Container (4) ein an der Vorderseite offenes Rahmengehäuse (60) aufweist, wobei die Frontplatte (8) lösbar über der offenen Vorderseite befestigbar ist.

3. Pflanzmodul nach Anspruch 2, wobei das Rahmengehäuse (60) eine sich zwischen Rückwand (28) und Vorderseite entlang einer Erstreckung verjüngende Grundform aufweist und die Frontplatte (8) so befestigbar oder ausgebildet ist, dass sie im befestigten Zustand die Verjüngung zu einer Quaderaußenform ausgleicht.

4. Pflanzmodul nach einem der obigen Ansprüche, wobei die Montageelemente eine seitliche Leiste aus Rasthaken (80) und die Gegenelemente eine Leiste aus dazu passenden Rastaufnahmen (82) zum Verriegeln der Rasthaken (80) aufweisen.

5. Pflanzmodul nach einem der obigen Ansprüche, wobei die Frontplatte (8) und der Rand (78) des Containers (4) eine Schattenfuge (103) ausbilden, deren Breite (A) den Verschiebeweg abdeckt.

6. Pflanzmodul nach einem der Ansprüche 4 oder 5, wobei die Montageelemente am unteren Rand der Frontplatte (8) mindestens ein Einhängelement (92), bevorzugt als Einhängleiste ausgebildet, aufweisen, wobei ein vertikal verlaufender Einhängweg des Einhängelements dem Weg entspricht, um die Rasthaken (80) zu verriegeln, wobei optional die Montageelemente mindestens einen Sicherungshaken (86) am oberen Rand der Frontplatte (8) und die Gegenelemente eine dazu passende Einhängöffnung (84) aufweisen, und/oder dass die Montageelemente und die Gegenelemente Magnete aufweisen.

7. Pflanzmodul nach einem der obigen Ansprüche, wobei der Außenumriss der Frontplatte (8) 80% bis 95% des äußeren Umrisses des Containers (4) bedeckt, bevorzugt 90% bis 95%.

8. Pflanzmodul nach einem der obigen Ansprüche, wobei der Container (4) an seiner Oberseite und seiner Unterseite jeweils Ausrichtelemente aufweist, um zwei Container (4) übereinander gestapelt zur hängenden Wandmontage auszurichten, wobei die Frontplatte (8) jedes Containers (4) auch bei übereinander gestapelten Containern abnehmbar ist.

9. Pflanzmodul nach einem der obigen Ansprüche, wobei es eine Blende (12, 18, 58), die am unteren Rand der Öffnung (10, 16, 52) angeordnet ist, um Pflanzbodenmaterial gegen Herausfallen zu sichern, und dass das Pflanzmodul (2) einen als Schublade (14, 20, 54) ausgebildeten Pflanzbehälter aufweist, die Schublade (14, 20, 54) zur Aufnahme von Pflanzbodenmaterial ausgebildet ist, die Schublade (14, 20, 54) ein der Öffnung (10, 16, 52) entsprechendes Korpusmaß hat und durch die Öffnung (10, 16, 52) der Frontplatte (8) in den Container (4) einschiebbar ist, und die Schublade (14, 20, 54) eine die Blende bildende Schubladenfront (12, 18, 58) hat.

10. Pflanzmodul nach Anspruch 9, wobei die Schublade (14, 20, 54) auf einer an der Frontplatte (8) angebrachten, sich von dieser in den Container (4) hinein erstreckenden Führung geführt ist, und/oder dass die Schublade (14, 20, 54) im eingeschobenen Zustand an der Frontplatte (8) einhängbar ist, so dass sie sich an der Frontplatte (8) abstützt und insbesondere in den Container hin auskragt.

11. Pflanzmodul nach einem der Ansprüche 9 oder 10, wobei der als Schublade (14, 20, 54) ausgebildete Pflanzbehälter einen rückseitigen Anschlag, bevorzugt in Form einer Schubladenrückwand (24, 26), aufweist, der im eingeschobenen Zustand an der Rückwand (28) des Containers (4) anliegt, um die Schublade (14, 20, 54) in einer von der Frontplatte (8) zur Rückwand (28) hin auskragenden Lage zu stabilisieren, insbesondere wenn sie an der Frontplatte (8) eingehängt ist.

12. Pflanzmodul nach einem der Ansprüche 9 bis 11, wobei der als Schublade (14, 20, 54) ausgebildete Pflanzbehälter einen Schubladenboden aufweist, der bei aufrecht abgeordnetem Container (4) beim Einschieben im Wesentlichen horizontal liegt.

13. Pflanzmodul nach einem der obigen Ansprüche, aufweisend einen am Boden des Containers (4) befestigbaren Sammelkasten (34), und/oder einen an der Oberseite des Containers (4) aufsetzbaren Versorgungskasten (36).

14. Pflanzwand für einen hängenden Garten, mit mindestens zwei übereinander angeordneten Pflanzmodulen (2) nach einem der Ansprüche 1 bis 13.

## Claims

1. A planting module for a hanging garden, comprising:
a container (4) with a front panel (8) that has at least one opening (10, 16, 52) for a plant shoot,
wherein
the front panel (8) has at least two openings (10, 16, 52), each for a plant shoot, and is detachably secured to the container (4) in a wall-mounted state, and
the container (4) comprises a rear wall (28) designed for wall mounting, a lid (56), a bottom, and two side walls (68), wherein the lid (56), the bottom, and the side walls (68) - as viewed from the rear wall (28) - define an outer contour of the container (4), and fastening means for the detachable mounting of the front panel (8) to the container (4) comprise mounting elements attached to or formed on the side of the front panel (8) facing the container (4) and counter-elements attached to or formed on the container (4) , which interact with the mounting elements such that the front panel (8) can be secured to the container (4) over a mounting path in which, as viewed towards the rear wall (28), an outer contour of the front panel (8) always remains within the outer contour of the container (4),
**characterized in that**
the mounting path comprises a displacement path extending along the front panel, preferably of 1 cm or less, to bring the mounting elements and the mating elements into a securing engagement, wherein an outer contour of the front panel (8) in the direction of the displacement path is at least by the length of the displacement path smaller than the outer contour of the container (4).

2. The planting module according to claim 1, wherein the container (4) comprises a frame housing (60) open at the front, wherein the front panel (8) can be detachably secured over the open front.

3. The planting module according to claim 2, wherein the frame housing (60) has a basic shape that tapers between the rear wall (28) and the front side along an extension, and the front panel (8) is designed or can be secured such that, when secured, it compensates for the tapering to form a rectangular prism shape.

4. The planting module according to one of the preceding claims, wherein the mounting elements comprise a lateral strip of locking hooks (80) and the mating elements comprise a strip of corresponding locking receptacles (82) for locking the locking hooks (80).

5. The planting module according to any one of the preceding claims, wherein the front panel (8) and the edge (78) of the container (4) form a shadow gap (103) whose width (A) covers the displacement path.

6. The planting module according to any of claims 4 or 5, wherein the mounting elements on the lower edge of the front panel (8) comprise at least one mounting element (92), preferably in the form of a mounting strip, wherein a vertically extending mounting path of the mounting element corresponds to the path for locking the locking hooks (80), wherein optionally the mounting elements comprise at least one locking hook (86) at the upper edge of the front panel (8) and the mating elements comprise a corresponding engagement opening (84), and/or that the mounting elements and the mating elements comprise magnets.

7. The planting module according to any of the preceding claims, wherein the outer contour of the front panel (8) covers 80% to 95% of the outer contour of the container (4), preferably 90% to 95%.

8. The planting module according to any of the preceding claims, wherein the container (4) has alignment elements on both its top and bottom surfaces to align two containers (4) stacked one on top of the other for hanging wall mounting, wherein the front panel (8) of each container (4) is removable even when the containers are stacked one on top of the other.

9. The planting module according to any of the preceding claims, comprising a baffle (12, 18, 58) arranged at the lower edge of the opening (10, 16, 52) to prevent growing medium from falling out, and wherein the planting module (2) comprises a planting container formed as a drawer (14, 20, 54), the drawer (14, 20, 54) is designed to hold potting soil, the drawer (14, 20, 54) has a body dimension corresponding to the opening (10, 16, 52) and can be inserted through the opening (10, 16, 52) of the front panel (8) into the container (4), and the drawer (14, 20, 54) has a drawer front (12, 18, 58) forming the faceplate.

10. The planting module according to claim 9, wherein the drawer (14, 20, 54) is guided on a guide attached to the front panel (8) and extending from it into the container (4), and/or wherein the drawer (14, 20, 54) can be hooked onto the front panel (8) when in the retracted position, so that it is supported by the front panel (8) and, in particular, projects into the container.

11. The planting module according to any one of claims 9 or 10, wherein the planting container, designed as a drawer (14, 20, 54), comprises a rear stop, preferably in the form of a drawer back panel (24, 26), which, when the drawer is inserted, rests against the rear wall (28) of the container (4) to stabilize the drawer (14, 20, 54) in a position projecting from the front panel (8) toward the rear wall (28), particularly when it is hooked onto the front panel (8).

12. The planting module according to any one of claims 9 to 11, wherein the planting container, which is designed as a drawer (14, 20, 54), comprises a drawer bottom that lies substantially horizontally when the container (4) is positioned upright and the drawer is inserted.

13. The planting module according to any one of the preceding claims, comprising a collection box (34) that can be secured to the bottom of the container (4), and/or a supply box (36) that can be placed on top of the container (4).

14. A plant wall for a hanging garden, comprising at least two plant modules (2) arranged one above the other according to any one of claims 1 to 13.

## Revendications

1. Module de plantation pour jardin suspendu, comprenant :
un bac (4) muni d'une plaque frontale (8) comportant au moins une ouverture (10, 16, 52) destinée à accueillir une pousse de plante,
dans lequel
la plaque frontale (8) comporte au moins deux ouvertures (10, 16, 52) destinées chacune à un plant et est fixée de manière amovible au conteneur (4) lorsque celui-ci est monté au mur, et
le conteneur (4) comporte une paroi arrière (28) conçue pour un montage mural, un couvercle (56), un fond et deux parois latérales (68), le couvercle (56), le fond et les parois latérales (68) - vus depuis la paroi arrière (28) - définissent un contour extérieur du conteneur (4), et des moyens de fixation pour le montage amovible de la plaque frontale (8) sur le conteneur (4) comprennent des éléments de montage fixés ou formés sur la face de la plaque frontale (8) tournée vers le conteneur (4) et des contre-éléments fixés ou formés sur le conteneur (4) qui coopèrent avec les éléments de montage de telle sorte que la plaque frontale (8) puisse être fixée au conteneur (4) selon une course de montage dans laquelle, vue depuis la paroi arrière (28), le contour extérieur de la plaque frontale (8) reste toujours à l'intérieur du contour extérieur du conteneur (4),
**caractérisé en ce que**
le trajet de montage présente un déplacement s'étendant le long de la plaque frontale, de préférence de 1 cm ou moins, afin d'amener les éléments de montage et les contre-éléments en engagement de fixation, le contour extérieur de la plaque frontale (8) étant, dans la direction du déplacement, inférieur au contour extérieur du conteneur (4) d'au moins la longueur du déplacement.

2. Module de plantation selon la revendication 1, dans lequel le conteneur (4) comporte un boîtier à cadre (60) ouvert à l'avant, la plaque avant (8) pouvant être fixée de manière amovible sur la face avant ouverte.

3. Module de plantation selon la revendication 2, dans lequel le boîtier à cadre (60) présente une forme de base se rétrécissant entre la paroi arrière (28) et la face avant le long d'une extension, et la plaque frontale (8) est conçue ou peut être fixée de telle sorte qu'à l'état fixé, elle compense le rétrécissement pour former un parallélépipède rectangle.

4. Module de plantation selon l'une des revendications précédentes, dans lequel les éléments de montage comportent une barre latérale constituée de crochets d'encliquetage (80) et les éléments complémentaires comportent une barre constituée de logements d'encliquetage (82) adaptés à ceux-ci pour verrouiller les crochets d'encliquetage (80).

5. Module de plantation selon l'une des revendications précédentes, dans lequel la plaque frontale (8) et le bord (78) du conteneur (4) forment un joint creux (103) dont la largeur (A) couvre la course de déplacement.

6. Module de plantation selon l'une des revendications 4 ou 5, dans lequel les éléments de montage sur le bord inférieur de la plaque frontale (8) comportent au moins un élément d'accrochage (92), de préférence sous la forme d'une barre d'accrochage, la course d'accrochage verticale de l'élément d'accrochage correspondant à la course nécessaire pour verrouiller les crochets d'encliquetage (80), les éléments de montage comportant en option au moins un crochet de sécurité (86) sur le bord supérieur de la plaque frontale (8) et les contre-éléments comportant une ouverture d'accrochage (84) correspondante, et/ou en ce que les éléments de montage et les contre-éléments comportent des aimants.

7. Module de plantation selon l'une des revendications ci-dessus, dans lequel le contour extérieur de la plaque frontale (8) recouvre 80 % à 95 % du contour extérieur du conteneur (4), de préférence 90 % à 95 %.

8. Module de plantation selon l'une des revendications précédentes, dans lequel le conteneur (4) comporte, sur sa face supérieure et sa face inférieure, des éléments d'alignement destinés à aligner deux conteneurs (4) empilés l'un sur l'autre en vue d'un montage mural suspendu, la plaque frontale (8) de chaque conteneur (4) pouvant être retirée même lorsque les conteneurs sont empilés l'un sur l'autre.

9. Module de plantation selon l'une des revendications précédentes, dans lequel il comporte un cache (12, 18, 58) disposé sur le bord inférieur de l'ouverture (10, 16, 52) pour empêcher le terreau de s'échapper, et dans lequel le module de plantation (2) comporte un bac de plantation formé en tant que tiroir (14, 20, 54), le tiroir (14, 20, 54) étant conçu pour recevoir du terreau, le tiroir (14, 20, 54) ayant des dimensions correspondant à celles de l'ouverture (10, 16, 52) et pouvant être inséré à travers l'ouverture (10, 16, 52) de la plaque frontale (8) dans le conteneur (4), et le tiroir (14, 20, 54) présente une façade de tiroir (12, 18, 58) formant le cache.

10. Module de plantation selon la revendication 9, dans lequel le tiroir (14, 20, 54) est guidé sur un rail fixé à la plaque frontale (8) et s'étendant depuis celle-ci à l'intérieur du conteneur (4), et/ou en ce que le tiroir (14, 20, 54) peut être accrochée à la plaque frontale (8) lorsqu'elle est en position rentrée, de sorte qu'elle s'appuie sur la plaque frontale (8) et fait notamment saillie dans le conteneur.

11. Module de plantation selon l'une des revendications 9 ou 10, dans lequel le bac à plantes conçu sous forme de tiroir (14, 20, 54) comporte une butée arrière, de préférence sous la forme d'une paroi arrière de tiroir (24, 26),
qui, à l'état rentré, s'appuie contre la paroi arrière (28) du conteneur (4) afin de stabiliser le tiroir (14, 20, 54) dans une position en saillie de la plaque avant (8) vers la paroi arrière (28), en particulier lorsqu'il est accroché à la plaque avant (8).

12. Module de plantation selon l'une des revendications 9 à 11, dans lequel le bac à plantes conçu sous forme de tiroir (14, 20, 54) comporte un fond de tiroir qui, lorsque le conteneur (4) est disposé à la verticale, se trouve essentiellement à l'horizontale lors de l'insertion.

13. Module de plantation selon l'une des revendications ci-dessus, comportant un bac de récupération (34) pouvant être fixé au fond du conteneur (4), et/ou un bac d'alimentation (36) pouvant être placé sur la face supérieure du conteneur (4).

14. Mur végétal pour un jardin suspendu, comprenant au moins deux modules de plantation (2) superposés selon l'une des revendications 1 à 13.
